# EUROPEAN PATENT SPECIFICATION

(11) **EP 4 592 935 B1**
(45) Date of publication and mention of the grant of the patent: **09.09.2026**
(21) Application number: 23926052.4
(22) Date of filing: 27.11.2023
(51) Int. Cl.: G06Q 40/04, H04L 9/32

(54) **DATA PROCESSING METHOD AND APPARATUS BASED ON BLOCKCHAIN, AND DEVICE AND READABLE STORAGE MEDIUM**
DATENVERARBEITUNGSVERFAHREN UND -VORRICHTUNG AUF BASIS EINER BLOCKCHAIN SOWIE VORRICHTUNG UND LESBARES SPEICHERMEDIUM
PROCÉDÉ ET APPAREIL DE TRAITEMENT DE DONNÉES BASÉS SUR UNE CHAÎNE DE BLOCS, ET DISPOSITIF ET SUPPORT DE STOCKAGE LISIBLE

(30) Priority: 03.03.2023 CN 202310239564
(43) Date of publication of application: 30.07.2025
(73) Proprietor: Tencent Technology (Shenzhen) Company Limited, Shenzhen, Guangdong 518057 (CN)
(72) Inventor: LIU, Kemeng, Shenzhen, Guangdong 518057 (CN)
(74) Representative: Gunzelmann, Rainer
(86) International application number: PCT/CN2023/134377
(87) International publication number: WO 2024/183358

(56) References cited:
- WO-A1-2020/177547
- WO-A1-2022/120521
- CN-A- 112 907 369
- CN-A- 113 409 047
- CN-A- 114 564 412
- CN-A- 114 896 032
- US-A1- 2019 332 586
- US-A1- 2021 194 672
- US-A1- 2022 311 595
- WU CHENYUAN ET AL: "AdaChain: A Learned Adaptive Blockchain", ARXIV.ORG, 3 November 2022 (2022-11-03), pages 1 - 14, XP093350988, Retrieved from the Internet <URL:https://arxiv.org/abs/2211.01580> DOI: 10.48550/arxiv.2211.01580
- ANDROULAKI ELLI ET AL: "Hyperledger fabric a distributed operating system for permissioned blockchains", MULTIMEDIA, ACM, 2 PENN PLAZA, SUITE 701NEW YORKNY10121-0701USA, 23 April 2018 (2018-04-23), pages 1 - 15, XP058543970, ISBN: 978-1-4503-5665-7, DOI: 10.1145/3190508.3190538

## Description

### RELATED APPLICATION

This application claims priority to Chinese Patent Application No. 202310239564.X entitled "BLOCKCHAIN-BASED DATA PROCESSING METHOD AND APPARATUS, DEVICE, AND READABLE STORAGE MEDIUM" filed on March 3, 2023.

### FIELD OF THE TECHNOLOGY

The present disclosure relates to the technical field of computers, and in particular, to a blockchain-based data processing method and apparatus, a device, and a readable storage medium.

### BACKGROUND OF THE DISCLOSURE

Blocks can be written into a blockchain after a consensus is reached, which makes the blockchain tamper-proof and authentic. Therefore, more and more enterprises are using blockchains to store transaction data to ensure the security of transaction data.

At present, there are mainly two types of transaction scheduling, including: deterministic scheduling, that a transaction execution sequence generated for scheduling the same batch of transactions is determined, and non-deterministic scheduling, that a transaction execution sequence generated for scheduling the same batch of transactions is random, and the results may be different even if the same node continuously runs a scheduling algorithm twice for the same batch of transactions. Since execution results of different scheduling algorithms are different, the consensus processing processes corresponding to different scheduling algorithms are different. As a result, one scheduling algorithm can usually be supported in each existing blockchain network, making the functional scenarios of a single blockchain network limited. Of particular pertinence is AdaChain (introduced in "Wu Chenyuan et al - "AdaChain: A Learned Adaptive Blockchain", published on the 34rd of November 2022) which is a blockchain architecture designed to dynamically adapt its consensus and operational parameters, including scheduling mechanisms, using machine learning (ML) techniques. AdaChain continuously monitors network conditions, transaction loads, and participant behaviours to optimize performance, security, and energy efficiency. By leveraging adaptive algorithms, AdaChain aims to overcome the limitations of static blockchain protocols, such as fixed block sizes or consensus mechanisms, which may not perform optimally under varying real-world conditions. Of further pertinence is United States patent application publication US2022311595A1 (by Vukolic Marko et al, published on the 29th September 2022), which discloses a method and system for reducing transaction aborts in execute-order-validate (EOV) blockchain models (such as Hyperledger Fabric) by introducing an uncommitted state cache at each blockchain node. The core idea per said publication is as follows: Write sets of transactions are stored in a cache after execution but before being committed to the blockchain; subsequent transactions can read from this cache if the required key is present, rather than reading only from the committed state. This approach by Vukovic *et al* allows transactions that are dependent on each other to be ordered and validated in a way that avoids unnecessary aborts due to serializability violations. The cache is synchronized among peers using dissemination and validation mechanisms, and entries are removed once the corresponding transactions are committed.

### SUMMARY

Embodiments of the present disclosure provide a blockchain-based data processing method and apparatus, a device, and a readable storage medium, which can make a deterministic scheduling algorithm and a non-deterministic scheduling algorithm compatible, thereby enriching the functional scenarios of the blockchain.

According to an aspect, an embodiment of the present disclosure provides a blockchain-based data processing method, including:
when a blockchain node determines through a core engine component that a block output condition is satisfied, acquiring chain configuration information through the core engine component, creating a preparatory block according to the chain configuration information, and determining a transaction scheduling type according to the chain configuration information, the block output condition referring to a condition that the blockchain node is selected as a proposal node for a current round of blocks;
performing execution processing on the preparatory block through the core engine component to obtain a first to-be-uploaded block if the core engine component determines that the transaction scheduling type is a non-deterministic scheduling type, the first to-be-uploaded block containing a first transaction execution sequence and a first transaction execution result;
transmitting the first to-be-uploaded block in the core engine component to a consensus component, and performing non-deterministic scheduling consensus processing on the first to-be-uploaded block through the consensus component; and
if the core engine component determines that the transaction scheduling type is a deterministic scheduling type, transmitting the preparatory block in the core engine component to the consensus component, and performing deterministic scheduling consensus processing on the preparatory block through the consensus component and the core engine component, the core engine component being configured to execute transactions in the preparatory block during the deterministic scheduling consensus processing.

According to another aspect, an embodiment of the present disclosure provides a blockchain-based data processing apparatus, including:
a packing module configured to, when it is determined through a core engine component that a block output condition is satisfied, acquire chain configuration information through the core engine component, create a preparatory block according to the chain configuration information, and determine a transaction scheduling type according to the chain configuration information, the block output condition referring to a condition that the blockchain node is selected as a proposal node for a current round of blocks;
a first execution module configured to perform execution processing on the preparatory block through the core engine component to obtain a first to-be-uploaded block if the core engine component determines that the transaction scheduling type is a non-deterministic scheduling type, the first to-be-uploaded block containing a first transaction execution sequence and a first transaction execution result;
a first consensus module configured to transmit the first to-be-uploaded block in the core engine component to a consensus component, and perform non-deterministic scheduling consensus processing on the first to-be-uploaded block through the consensus component; and
a second consensus module configured to, if the core engine component determines that the transaction scheduling type is a deterministic scheduling type, transmit the preparatory block in the core engine component to the consensus component, and perform deterministic scheduling consensus processing on the preparatory block through the consensus component and the core engine component, the core engine component being configured to execute transactions in the preparatory block during the deterministic scheduling consensus processing.

The chain configuration information includes block configuration information and a transaction scheduling identifier;
the packing module includes:
an acquisition unit configured to acquire the block configuration information and the transaction scheduling identifier through the core engine component;
a block packing unit configured to acquire to-be-packed transactions from a transaction pool according to the block configuration information, and pack the to-be-packed transactions to obtain a preparatory block; and
a scheduling determination unit configured to determine that the transaction scheduling type is a non-deterministic scheduling type if the transaction scheduling identifier is a non-deterministic scheduling identifier,
the scheduling determination unit being further configured to determine that the transaction scheduling type is a deterministic scheduling type if the transaction scheduling identifier is a deterministic scheduling identifier.

The first consensus module includes:
a first transmitting unit configured to transmit the first to-be-uploaded block in the core engine component to a consensus component;
a first scheduling determination unit configured to determine a transaction scheduling type through the consensus component;
a first pre-voting unit configured to perform pre-voting processing on the first to-be-uploaded block in the consensus component according to the first transaction execution sequence and the first transaction execution result in the first to-be-uploaded block to obtain a first intermediate pre-voting result if the consensus component determines that the transaction scheduling type is a non-deterministic scheduling type; and
a first voting unit configured to perform result voting processing on the first to-be-uploaded block according to the first intermediate pre-voting result and a first block hash corresponding to the first to-be-uploaded block to obtain a non-deterministic scheduling consensus result for the first to-be-uploaded block.

The first pre-voting unit includes:
a proposal broadcasting subunit configured to generate proposal information for the first to-be-uploaded block in the consensus component, and broadcast the proposal information to consensus nodes in a blockchain network, so that the consensus nodes in the blockchain network generate a second transaction execution result according to the proposal information, and generate first pre-voting information according to the first transaction execution result and the second transaction execution result, the second transaction execution result being obtained after the consensus nodes in the blockchain network execute transactions in the first to-be-uploaded block according to the first transaction execution sequence; and
a pre-voting subunit configured to generate second pre-voting information for the first transaction execution result, and broadcast the second pre-voting information to the consensus nodes in the blockchain network,
the pre-voting subunit being further configured to determine a first intermediate pre-voting result according to acquired first pre-voting information and second pre-voting information.

The first voting unit includes:
a voting processing subunit configured to generate first voting information for the first to-be-uploaded block according to the first intermediate pre-voting result and the first block hash corresponding to the first to-be-uploaded block, the first voting information containing the first intermediate pre-voting result and the first block hash;
the voting processing subunit being further configured to transmit the first voting information to consensus nodes in a blockchain network;
the voting processing subunit being further configured to receive second voting information for the first to-be-uploaded block transmitted by the consensus nodes in the blockchain network, the second voting information containing an intermediate pre-voting result determined by the consensus nodes in the blockchain network and the first block hash; and
a result determination subunit configured to determine a non-deterministic scheduling consensus result for the first to-be-uploaded block according to the first voting information and the second voting information.

The second consensus module includes:
a second transmitting unit configured to transmit the preparatory block in the core engine component to a consensus component;
a second scheduling determination unit configured to determine a transaction scheduling type through the consensus component;
a second pre-voting unit configured to generate proposal information for the preparatory block in the consensus component if the consensus component determines that the transaction scheduling type is a deterministic scheduling type, and broadcast the proposal information to consensus nodes in a blockchain network, so that the consensus nodes in the blockchain network execute the transactions in the preparatory block in the proposal information according to a deterministic transaction execution sequence;
a first result receiving unit configured to generate fourth pre-voting information for a third transaction execution result if the third transaction execution result transmitted by the core engine component is received through the consensus component, and broadcast the fourth pre-voting information and the third transaction execution result to the consensus nodes in the blockchain network, so that the consensus nodes in the blockchain network generate third pre-voting information according to the third transaction execution result, the third transaction execution result being obtained after the core engine component starts to execute the transactions in the preparatory block according to the deterministic transaction execution sequence when the preparatory block is acquired;
the second pre-voting unit being further configured to determine a second intermediate pre-voting result according to acquired third pre-voting information and fourth pre-voting information;
a first block update unit configured to update the preparatory block according to the third transaction execution result to obtain a second to-be-uploaded block; and
a second voting unit configured to perform result voting processing on the second to-be-uploaded block according to the second intermediate pre-voting result and a second block hash corresponding to the second to-be-uploaded block to obtain a deterministic scheduling consensus result for the second to-be-uploaded block.

The consensus component includes a consensus adaptation component and a consensus execution component;
the first consensus module includes:
a third transmitting unit configured to transmit the first to-be-uploaded block in the core engine component to the consensus adaptation component;
a hash generation unit configured to generate a first voting hash for the first to-be-uploaded block in the consensus adaptation component according to the first block hash corresponding to the first to-be-uploaded block;
a fourth transmitting unit configured to transmit the first to-be-uploaded block and the first voting hash in the consensus adaptation component to the consensus execution component;
a third pre-voting unit configured to perform pre-voting processing on the first to-be-uploaded block in the consensus execution component according to the first transaction execution sequence and the first transaction execution result in the first to-be-uploaded block to obtain a third intermediate pre-voting result; and
a third voting unit configured to perform result voting processing on the first to-be-uploaded block according to the first voting hash and the third intermediate pre-voting result to obtain a non-deterministic scheduling consensus result for the first to-be-uploaded block.

The consensus component includes a consensus adaptation component and a consensus execution component;
the second consensus module includes:
a fifth transmitting unit configured to transmit the preparatory block in the core engine component to the consensus adaptation component;
a fourth pre-voting unit configured to transmit the preparatory block to the consensus execution component through the consensus adaptation component, generate proposal information for the preparatory block in the consensus execution component, and broadcast the proposal information to consensus nodes in a blockchain network, so that the consensus nodes in the blockchain network execute the transactions in the preparatory block in the proposal information according to a deterministic transaction execution sequence;
a second result receiving unit configured to receive a fourth transaction execution result transmitted by the core engine component through the consensus adaptation component, the fourth transaction execution result being obtained after the core engine component executes the transactions in the preparatory block according to the deterministic transaction execution sequence;
a second block update unit configured to update the preparatory block in the consensus adaptation component according to the fourth transaction execution result to obtain a third to-be-uploaded block, and generate a second voting hash for the third to-be-uploaded block according to a third block hash corresponding to the third to-be-uploaded block;
a sixth transmitting unit configured to transmit the fourth transaction execution result and the second voting hash in the consensus adaptation component to the consensus execution component;
the fourth pre-voting unit being further configured to generate fifth pre-voting information for the fourth transaction execution result in the consensus execution component, and broadcast the fifth pre-voting information and the fourth transaction execution result to the consensus nodes in the blockchain network, so that the consensus nodes in the blockchain network generate sixth pre-voting information according to the fourth transaction execution result;
the fourth pre-voting unit being further configured to determine a fourth intermediate pre-voting result according to acquired sixth pre-voting information and fifth pre-voting information; and
a fourth voting unit configured to perform result voting processing on the third to-be-uploaded block according to the second voting hash and the fourth intermediate pre-voting result to obtain a deterministic scheduling consensus result for the third to-be-uploaded block.

The data processing apparatus further includes:
a third consensus module configured to perform signature verification processing on a to-be-consented block in the consensus component according to proposal information for the to-be-consented block to obtain a signature verification result when the blockchain node receives the proposal information through the consensus component, the to-be-consented block being generated by a target blockchain node in a blockchain network when determining that the block output condition is satisfied;
the third consensus module being further configured to determine the transaction scheduling type through the core engine component if the consensus component determines that the signature verification result is a signature verification pass result;
the third consensus module being further configured to acquire a second transaction execution sequence from the to-be-consented block if the core engine component determines that the transaction scheduling type is a non-deterministic scheduling type, and execute the to-be-consented block according to the second transaction execution sequence to obtain a fifth transaction execution result;
the third consensus module being further configured to transmit the fifth transaction execution result in the core engine component to the consensus component, and perform verification voting processing on the to-be-consented block in the consensus component according to the fifth transaction execution result to obtain a consensus result for the to-be-consented block;
the third consensus module being further configured to execute the to-be-consented block according to a deterministic transaction execution sequence to obtain a sixth transaction execution result if the core engine component determines that the transaction scheduling type is a deterministic scheduling type; and
the third consensus module being further configured to transmit the sixth transaction execution result in the core engine component to the consensus component, and perform verification voting processing on the to-be-consented block in the consensus component according to the sixth transaction execution result to obtain a consensus result for the to-be-consented block.

The consensus component includes a consensus adaptation component and a consensus execution component;
the data processing apparatus further includes:
a fourth consensus module configured to perform signature verification processing on a to-be-consented block in the consensus execution component according to proposal information for the to-be-consented block to obtain a signature verification result when the blockchain node receives the proposal information through the consensus execution component, the to-be-consented block being generated by a target blockchain node in a blockchain network when the block output condition is satisfied;
the fourth consensus module being further configured to transmit an execution request to the consensus adaptation component through the consensus execution component if the consensus execution component determines that the signature verification result is a signature verification pass result, and transmit the execution request to the core engine component through the consensus adaptation component;
the fourth consensus module being further configured to determine the transaction scheduling type in the core engine component according to the execution request;
the fourth consensus module being further configured to acquire a second transaction execution sequence from the to-be-consented block if the core engine component determines that the transaction scheduling type is a non-deterministic scheduling type, and execute the to-be-consented block according to the second transaction execution sequence to obtain a seventh transaction execution result;
the fourth consensus module being further configured to transmit the seventh transaction execution result in the core engine component to the consensus adaptation component, and generate a third voting hash in the consensus adaptation component according to the seventh transaction execution result;
the fourth consensus module being further configured to transmit the seventh transaction execution result and the third voting hash to the consensus execution component through the consensus adaptation component, and perform verification voting processing on the to-be-consented block in the consensus execution component according to the seventh transaction execution result and the third voting hash to obtain a consensus result for the to-be-consented block;
the fourth consensus module being further configured to execute the to-be-consented block according to a deterministic transaction execution sequence to obtain an eighth transaction execution result if the core engine component determines that the transaction scheduling type is a deterministic scheduling type;
the fourth consensus module being further configured to transmit the eighth transaction execution result from the core engine component to the consensus adaptation component, and generate a fourth voting hash in the consensus adaptation component according to the eighth transaction execution result; and
the fourth consensus module being further configured to transmit the eighth transaction execution result and the fourth voting hash to the consensus execution component through the consensus adaptation component, and perform verification voting processing on the to-be-consented block in the consensus execution component according to the eighth transaction execution result and the fourth voting hash to obtain a consensus result for the to-be-consented block.

The data processing apparatus further includes:
a configuration update module configured to acquire a configuration information update transaction, the configuration information update transaction including updating a transaction scheduling identifier; and
the configuration update module being further configured to call a configuration information update contract according to the configuration information update transaction if it is determined that the configuration information update transaction passes in consensus, and update the transaction scheduling identifier through the configuration information update contract.

According to another aspect, an embodiment of the present disclosure provides a computer device, including: a processor, a memory, and a network interface,
the processor being connected to the memory and the network interface, the network interface being configured to provide a data communication network element, the memory being configured to store a computer program, and the processor being configured to call the computer program to execute the method according to an embodiment of the present disclosure described above.

According to another aspect, an embodiment of the present disclosure provides a computer-readable storage medium, the computer-readable storage medium having a computer program stored therein, the computer program being adapted to be loaded and executed by a processor to execute the method according to an embodiment of the present disclosure described above.

According to another aspect, an embodiment of the present disclosure provides a computer program product or a computer program, the computer program product or computer program including computer instructions, the computer instructions being stored in a computer-readable storage medium, a processor of a computer device reading the computer instructions from the computer-readable storage medium, the processor executing the computer instructions to enable the computer device to execute the method according to an embodiment of the present disclosure described above.

In this embodiment of the present disclosure, when a blockchain node determines through a core engine component that a block output condition is satisfied, chain configuration information may be through the core engine component, a preparatory block is created according to the chain configuration information, and a transaction scheduling type is determined according to the chain configuration information; execution processing is performed on the preparatory block through the core engine component to obtain a first to-be-uploaded block if the core engine component determines that the transaction scheduling type is a non-deterministic scheduling type; the first to-be-uploaded block contains a first transaction execution sequence and a first transaction execution result; the first to-be-uploaded block in the core engine component is transmitted to a consensus component, and non-deterministic scheduling consensus processing is performed on the first to-be-uploaded block through the consensus component; and if the core engine component determines that the transaction scheduling type is a deterministic scheduling type, the preparatory block in the core engine component is transmitted to the consensus component, and deterministic scheduling consensus processing is performed on the preparatory block through the consensus component and the core engine component. Through the method provided in this embodiment of the present disclosure, the consensus component can adapt to different consensus processing processes for scheduling algorithms of different transaction scheduling types, which can make the blockchain node compatible with a deterministic scheduling algorithm and a non-deterministic scheduling algorithm, thereby enriching the functional scenarios of the blockchain network.

### BRIEF DESCRIPTION OF THE DRAWINGS

In order to more clearly describe embodiments of the present disclosure or the technical solutions in the related arts, the following will briefly introduce the drawings needed in the description of the embodiments or the related arts. Clearly, the drawings in the following description are only some embodiments of the present disclosure. A person skilled in the art may obtain other drawings from these drawings without contributing any inventive labor.
FIG. 1 is a schematic structural diagram of a blockchain network according to an embodiment of the present disclosure.
FIG. 2 is a schematic diagram of a scenario of a blockchain-based data processing method according to an embodiment of the present disclosure.
FIG. 3a is a flowchart of a blockchain-based data processing method according to an embodiment of the present disclosure.
FIG. 3b is a schematic diagram of a consensus process in which a proposal node adapts to different scheduling algorithms according to an embodiment of the present disclosure.
FIG. 4a is a flowchart of a blockchain-based data processing method according to an embodiment of the present disclosure.
FIG. 4b is a schematic diagram of a consensus process in which a proposal node adapts to different scheduling algorithms according to an embodiment of the present disclosure.
FIG. 5a is a flowchart of a blockchain-based data processing method according to an embodiment of the present disclosure.
FIG. 5b is a schematic diagram of a consensus process in which a verification node adapts to different scheduling algorithms according to an embodiment of the present disclosure.
FIG. 6a is a flowchart of a blockchain-based data processing method according to an embodiment of the present disclosure.
FIG. 6b is a schematic diagram of a consensus process in which a verification node adapts to different scheduling algorithms according to an embodiment of the present disclosure.
FIG. 7 is a schematic structural diagram of a blockchain-based data processing apparatus according to an embodiment of the present disclosure.
FIG. 8 is a schematic structural diagram of a computer device according to an embodiment of the present disclosure.

### DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

To facilitate understanding, first, some norms will be briefly explained below.
1. Blockchain: In a narrow sense, blockchain is a chained data structure in a basic unit of block. In blocks, digital digests are used for verifying previously acquired transaction history, which is suitable for tamper-proof and scalability requirements in distributed bookkeeping scenarios; in a broad sense, blockchain also refers to a distributed bookkeeping technology realized by a blockchain structure, including distributed consensus, privacy and security protection, peer-to-peer communication technology, network protocol, smart contract, and the like.

The goal of blockchain is to achieve a distributed data record ledger, which allows addition and does not allow deletion. The basic structure of the bottom layer of the ledger is a linear linked list. The linked list is composed of "blocks" in series. The hash of the predecessor block is recorded in the subsequent block. Whether each block (and the transactions in the block) is valid can be quickly verified by calculating the hash. If a node in the network proposes to add a new block, the block needs to be confirmed by consensus through a consensus mechanism.

2. Block: It is a data packet that carries transaction data on the blockchain network and is a data structure marked with a timestamp and the hash corresponding to the predecessor block. The transaction in the block is verified and confirmed through the consensus mechanism of the network. A block includes a block header and a block body. The block header can record the meta information of the current block, including the current version number, the hash corresponding to the predecessor block, the timestamp, the random number, the hash of the Merkle Root, and other data. The block body can record the detailed data generated within a period of time, including verified transaction records or other information generated for the current block in the block creation process, which can be understood as a manifestation of the ledger. In addition, the detailed data of the block body may include a unique Merkle Root generated through the hash process of Merkle Tree, which is recorded in the block header.

The predecessor block, also known as the parent block, is sorted in time by recording the hash corresponding to the block and the hash corresponding to the parent block in the block header.

3. Hash: It is also known as information eigenvalue or eigenvalue. Hash is generated by converting input data of any length into a password through a hash algorithm and performing fixed output. The original input data cannot be retrieved by decrypting the hash. It is a one-way encryption function. In the blockchain, each block (except the initial block) contains the hash of the predecessor block. The hash is the core foundation and the most important aspect of the potential of the blockchain technology. It preserves the authenticity of the recorded and viewed data and the integrity of the blockchain.

4. Smart contract: The concept of smart contract has three major elements: commitment, protocol, and digital form, which can expand the application scope of the blockchain to various aspects of financial industry transactions, payments, settlements, and clearing. Smart contract refers to the immediate execution of corresponding contract terms when a pre-programmed condition is triggered, and its working principle is similar to the if-then statement of a computer program.

5. Deterministic scheduling: It refers to that a first transaction execution sequence generated for scheduling the same batch of transactions is determined. The advantage of this type of algorithms is that the first transaction execution sequence is stable and reproducible. Therefore, theoretically, the information of the first transaction execution sequence may be not contained in the block, and each verification node may run a parallel scheduling algorithm for verification. In an example, "Deterministic scheduling" means that the execution order of transactions packed into a preparatory block is consistent among all consensus nodes (the proposal node and verification nodes) in the blockchain network. For example, if the transactions packed into a preparatory block include Transaction 1, Transaction 2, Transaction 3, ..., and Transaction m, then all consensus nodes in the blockchain network will execute these transactions in the same order, such as Transaction 1 -> Transaction 2 -> Transaction 3 -> ... -> Transaction m.

6. Non-deterministic scheduling: It refers to that a first transaction execution sequence generated for scheduling the same batch of transactions is random, and the results may be different even if the same node continuously runs a scheduling algorithm twice for the same batch of transactions. This type of algorithms often has fast scheduling speed, and the difficulty lies in how the verification node ensures that the execution sequence is consistent with that of the proposal node and obtains the same execution result. Therefore, the execution sequence of transactions is configured to be packed into the block and verified by other nodes accordingly. In an example, "Non-deterministic scheduling" means that the execution orders of transactions packed into a preparatory block is inconsistent among consensus nodes in the blockchain network. For example, a proposal node may execute the transactions in the order of Transaction 1 -> Transaction 2 -> Transaction 3 -> ... -> Transaction m, while a verification node may execute the transactions in the order of Transaction 2 -> Transaction 3 -> Transaction 1 -> ... -> Transaction m. Alternatively, the same node (e.g., a proposal node) may execute the transactions in different orders during consecutive attempts. For instance, the proposal node may execute the transactions in the order of Transaction 1 -> Transaction 2 -> Transaction 3 -> ... -> Transaction m during the first attempt, but in the order of Transaction 2 -> Transaction 1 -> Transaction 3 -> ... -> Transaction m during the second attempt.

7. Consensus component: It may also be referred to as the consensus engine module, which is a module in the consensus node. The module mainly includes a consensus algorithm module and a peer-to-peer network module. The consensus algorithm module may contain various specific consensus algorithms, including fault-tolerant Raft consensus algorithms, as well as practical Byzantine Fault Tolerance (PBFT), Tendermint, HotStuff and other consensus algorithms. Different consensus algorithms have different applicable scenarios. The peer-to-peer network module is responsible for broadcasting and receiving proposal and voting messages.

8. Core engine component: It may also be referred to as the core engine module, which is the core scheduling module in the consensus node. This module mainly plays a central scheduling role. When the consensus node is a proposal node, the consensus engine module of the proposal node will notify the core engine module to construct a block and execute transactions. Finally, the constructed block will be given to the consensus engine module. Then, the consensus engine module will construct a proposal based on the block and broadcast it to other verification nodes. After receiving the proposal and verifying the validity, each verification node will have its core engine module verify the validity of the block and execute the transactions. If the transaction execution result of the verification node is consistent with that of the proposal node, the block is considered valid. In the embodiments of the present disclosure, the core engine component in the consensus node is also referred to as a core component/module, and is used for determining a transaction scheduling type (for example, determining the transaction scheduling type is a deterministic scheduling type or a non-deterministic scheduling type), such that the consensus component can adapt to different consensus processing processes for scheduling algorithms of different transaction scheduling types.

9. Proposal node: It is a role of consensus nodes in the blockchain, and consensus nodes are the key to maintaining data consistency throughout the entire blockchain network. The main responsibility of the proposal node is to pack transaction and construct a block in a round of consensus, and broadcast the block to other verification nodes. Therefore, the proposal node plays a key role in a round of consensus. If the proposal node does something wrong, packs invalid transactions, or has an incorrect block structure, no consensus on any block will be reached in this round of consensus.

10. Verification node: It is a role of consensus nodes in the blockchain, mainly responsible for verifying the validity of the block proposed by the proposal node and executing the transactions. When the verification block is invalid or the transaction execution result is inconsistent, it will not vote or vote against the block. When the block is verified as valid and the transaction execution result is consistent, it will vote for the block.

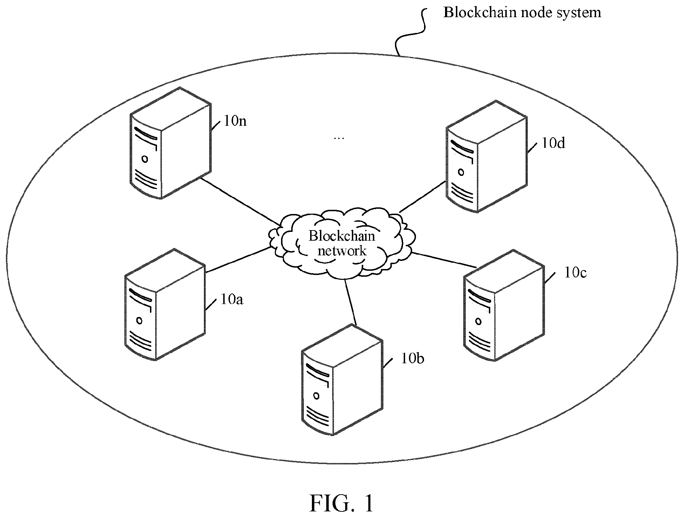

FIG. 1 is a schematic structural diagram of a blockchain network according to an embodiment of the present disclosure. The blockchain network shown in FIG. 1 may include but not limited to a blockchain network corresponding to a consortium blockchain. The blockchain network may include multiple blockchain nodes. The multiple blockchain nodes specifically include a blockchain node 10a, a blockchain node 10b, a blockchain node 10c, a blockchain node 10d,..., a blockchain node 10n. Each blockchain node may receive data transmitted from the outside world during typical operation, and process it on the blockchain based on the received data. It can also transmit data to the outside world. In order to ensure the data intercommunication between blockchain nodes, data connections may exist between blockchain nodes. For example, a data connection exists between the blockchain node 10a and the blockchain node 10b, a data connection exists between the blockchain node 10a and the blockchain node 10c, and a data connection exists between the blockchain node 10b and the blockchain node 10c.

Data or block transmission may be performed between blockchain nodes through the data connections. A blockchain network can achieve data connections between blockchain nodes based on node identifiers. Each blockchain node in the blockchain network has its corresponding node identifier, and each blockchain node may store the node identifiers of other blockchain nodes that are connected thereto, so that acquired data or generated block can be subsequently broadcast to other blockchain nodes according to the node identifiers of other blockchain nodes. For example, the blockchain node 10a may maintain a node identifier list as shown in Table 1. This node identifier list stores the node names and node identifiers of other blockchain nodes.

**Table 1**

| Node name | Node identifier |
|---|---|
| Node 10a | AAA. AAA. AAA. AAA |
| Node 10b | BBB.BBB.BBB.BBB |
| Node 10c | CCC.CCC.CCC.CCC |
| Node 10d | DDD.DDD.DDD.DDD |
| ··· | ··· |
| Node 10n | EEE.EEE.EEE.EEE |

The node identifier may be the Internet Protocol (IP) address of the interconnection between networks and any other information that can be used for identifying nodes in the blockchain network. In Table 1, description is made by taking the IP address as an example. For example, the blockchain node 10a may transmit information (e.g., a block) to the blockchain node 10b through the node identifier BBB.BBB.BBB.BBB, and the blockchain node 10b may determine that the information is transmitted by the blockchain node 10a through the node identifier AAA.AAA. AAA.AAA.

In the blockchain, before a block is uploaded to the blockchain, it is configured to go through a consensus by the consensus nodes in the blockchain network. After it passes in consensus can the block be added to the blockchain. When the blockchain is used in some scenarios of government or commercial institutions, not all participating nodes in the blockchain (i.e., the blockchain nodes in the blockchain network) have sufficient resources and necessity to become consensus nodes of the blockchain. For example, in the blockchain network shown in FIG. 1, the blockchain nodes 10a, 10b, 10c, and 10d may be used as consensus nodes in the blockchain network. The consensus nodes in the blockchain network participate in a consensus, that is, reaching a consensus on a block (including a batch of transactions), that is, voting on the block. The non-consensus nodes do not participate in the consensus, but they help communicate the block and voting messages, as well as synchronize states with each other.

In an embodiment of the present disclosure, when any blockchain node in the blockchain network shown in FIG. 1 determines through a core engine component that a block output condition is satisfied, chain configuration information may be acquired through the core engine component, a preparatory block is created according to the chain configuration information, and a transaction scheduling type is determined according to the chain configuration information; if the blockchain node determines through the core engine component that the transaction scheduling type is a non-deterministic scheduling type, execution processing is performed on the preparatory block through the core engine component to obtain a first to-be-uploaded block; the first to-be-uploaded block contains a first transaction execution sequence and a first transaction execution result; the first to-be-uploaded block in the core engine component is transmitted to a consensus component, and non-deterministic scheduling consensus processing is performed on the first to-be-uploaded block through the consensus component; and if the blockchain node determines through the core engine component that the transaction scheduling type is a deterministic scheduling type, the preparatory block in the core engine component is transmitted to the consensus component, and deterministic scheduling consensus processing is performed on the preparatory block through the consensus component and the core engine component.

The data connection methods are not limited. They may be directly or indirectly connected through wired communication, or directly or indirectly connected through wireless communication, or through other connection methods, which are not limited in the present disclosure.

The blockchain-based data processing method according to an embodiment of the present disclosure may be executed by a computer device, including but not limited to the blockchain node (which may be a terminal or a server). The server may be an independent physical server, a server cluster or a distributed system composed of multiple physical servers, or a cloud server that provides cloud services, cloud databases, cloud computing, cloud functions, cloud storage, network services, cloud communications, middleware services, domain name services, security services, content delivery network (CDN), and basic cloud computing servers for big data and artificial intelligence platforms. The terminal may be, but is not limited to, a smartphone, a tablet, a laptop, a desktop computer, a smart speaker, a smart watch, or the like.

Embodiments of the present disclosure may be applied to various scenarios, including but not limited to cloud technology, artificial intelligence, smart transportation, and the like. For example, a blockchain node system may perform consensus processing on some driving behavior data, road trajectory data, and so on transmitted by on board terminals, and upload them to the blockchain for storage after it passes in consensus.

In one implementation of the present disclosure, relevant data such as transaction data and state data are involved. In a case that an embodiment of the present disclosure is applied to a specific product or technology, a permission or consent of a user is configured, and collection, use, and processing of the relevant data are configured to comply with relevant laws, regulations, and standards of relevant countries and regions.

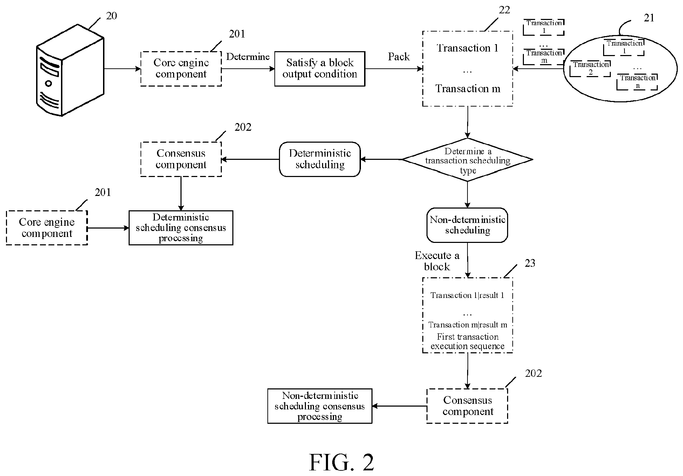

In order to conveniently understand the consensus process of the blockchain node under different scheduling algorithms, please jointly refer to FIG. 2. FIG. 2 is a schematic diagram of a scenario of a blockchain-based data processing method according to an embodiment of the present disclosure. A blockchain node 20 shown in FIG. 2 may be any blockchain node in the blockchain network shown in FIG. 1, such as the blockchain node 10. A core engine component 201 and a consensus component 202 may be integrally installed in the blockchain node 20.

Referring to FIG. 2, when the blockchain node 20 determines through the core engine component 201 that a block output condition is satisfied, that is, when the blockchain node 20 is selected as a proposal node for a current round of blocks based on a consensus mechanism in the blockchain network, chain configuration information corresponding to the blockchain network may be acquired. The chain configuration information may include block configuration information. The block configuration information may include block related configuration information, such as a fixed number of transactions that a block is required to contain. The blockchain node may acquire to-be-packed transactions, such as transaction 1,..., transaction m, from a transaction pool 21 according to block configuration information pack the to-be-packed transactions, and generate a preparatory block 22. The transaction pool 21 is configured to store transactions which are known but not contained in the blockchain network, such as transaction 1, transaction 2,..., transaction n. Any proposal node in the blockchain network acquires a fixed number of to-be-packed transactions from the transaction pool 21 to generate a new block when packing. Whenever a consensus is reached on the new block, the new block can be inserted into a blockchain ledger, triggering a refresh operation of the transaction pool 21, i.e., deleting the transactions already contained in the blockchain. Then, the blockchain node 20 continues to determine a transaction scheduling type through the core engine component 201.

Referring to FIG. 2, if the blockchain node 20 determines that the transaction scheduling type is a deterministic scheduling type, the blockchain node 20 will transmit the preparatory block 22 from the core engine component 201 to the consensus component 202. Then, the blockchain node 20 may perform deterministic scheduling consensus processing on the preparatory block 22 through the consensus component 22 and the core engine component 201 together.

Referring to FIG. 2, if the blockchain node 20 determines that the transaction scheduling type is a non-deterministic scheduling type, the blockchain node 20 will execute the preparatory block 22 based on a non-deterministic scheduling algorithm to obtain a to-be-uploaded block 23. In addition to transaction 1,..., and transaction m, the to-be-uploaded block 23 may further include a transaction execution result 1 corresponding to the transaction 1, a transaction execution result m corresponding to the transaction m, and a first transaction execution sequence. Then, the blockchain node 20 may transmit the to-be-uploaded block 23 from the core engine component 201 to the consensus component 202. Then, the blockchain node 20 may perform non-deterministic scheduling consensus processing on the to-be-uploaded block 23 through the consensus component 202.

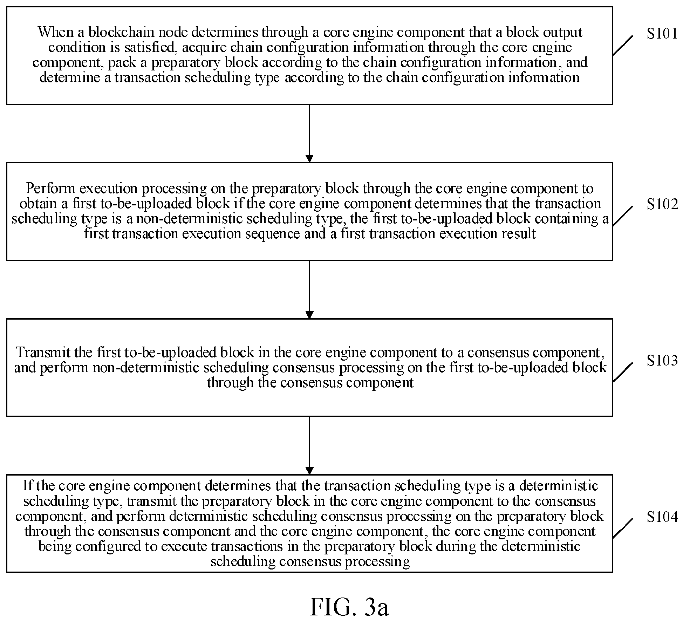

For the implementation processes of the deterministic scheduling consensus processing and non-deterministic scheduling consensus processing, a reference may be made to the description of operation S103 and operation S104 in an embodiment corresponding to FIG. 3a below.

Accordingly, by using the method provided in an embodiment of the present disclosure, different consensus processing may be adapted for both deterministic and non-deterministic scheduling types of transaction scheduling, which makes the blockchain node compatible with both deterministic and non-deterministic scheduling types of transaction scheduling, thereby enriching the functional scenarios of the blockchain network.

Further, please refer to FIG. 3a. FIG. 3a is a flowchart of a blockchain-based data processing method according to an embodiment of the present disclosure. The data processing method may be executed by a blockchain node (e.g., any blockchain node in the blockchain network in an embodiment corresponding to FIG. 1 above). Description will be made below by taking that the data processing method is executed by the blockchain node as an example. The blockchain-based data processing method may at least include operation S101 to operation S104 as follows.

At S101: When a blockchain node determines through a core engine component that a block output condition is satisfied, acquire chain configuration information through the core engine component, create a preparatory block according to the chain configuration information, and determine a transaction scheduling type according to the chain configuration information.

In an example, the block output condition being satisfied refers to the blockchain node is selected as a proposal node. In an implementation, whether a blockchain node is a proposal node can be determined using ProposeState of the blockchain node; for example, if ProposeState is true, it is represented that the blockchain node is a proposal node; otherwise, the blockchain node is not a proposal node. Specifically, when a consensus component of the blockchain node determines that the blockchain node is a proposal node, the consensus component sends MsgBus.ProposeState message indicating that the blockchain node is a proposal node to the core engine component, then the core engine component can determine, based on the MsgBus.ProposeState message, that the block output condition is satisfied. The chain configuration information in the present disclosure is used for creating a preparatory block and determining a transaction scheduling type. Specifically, the chain configuration information may include block configuration information and a transaction scheduling identifier. The block configuration information may include block related configuration information, such as a fixed number of transactions that a block should contain. One implementation process that chain configuration information is acquired through the core engine component, a preparatory block is created according to the chain configuration information, and a transaction scheduling type is determined according to the chain configuration information may be as follows: the block configuration information (for example, the fixed number of transactions that a block should contain) and the transaction scheduling identifier are acquired through the core engine component; to-be-packed transactions are acquired from a transaction pool according to the block configuration information (i.e., the fixed number of transactions), and the to-be-packed transactions are packed to obtain a preparatory block; it is determined that the transaction scheduling type is a non-deterministic scheduling type if the transaction scheduling identifier is a non-deterministic scheduling identifier; and it is determined that the transaction scheduling type is a deterministic scheduling type if the transaction scheduling identifier is a deterministic scheduling identifier. The block configuration information may include configuration information related to the block, such as the number of transactions that the block is configured to contain. The transaction scheduling identifier may be a number, letter, string, or the like. For example, if the transaction scheduling identifier is a number, the deterministic scheduling identifier may be "0", and the non-deterministic scheduling identifier may be "1".

At S102: Perform execution processing on the preparatory block through the core engine component to obtain a first to-be-uploaded block if the core engine component determines that the transaction scheduling type is a non-deterministic scheduling type, the first to-be-uploaded block containing a first transaction execution sequence and a first transaction execution result.

Specifically, under the non-deterministic scheduling algorithm, the sequence that the blockchain node schedules and executes all transactions in the block may be inconsistent, that is, the execution sequence of transactions is random. Therefore, when executing transactions in the preparatory block, the blockchain node will record the first transaction execution sequence (DAG), and then write the DAG into the first to-be-uploaded block. Thereafter, when other consensus nodes in the blockchain network perform consensus processing on the first to-be-uploaded block, the transactions in the first to-be-uploaded block need to be executed according to the DAG. The first to-be-uploaded block further includes a first transaction execution result obtained after executing the preparatory block. When performing consensus processing on the first to-be-uploaded block, each other consensus node may compare the transaction execution result obtained by execution with the first transaction execution result to achieve consensus voting.

At S103: Transmit the first to-be-uploaded block in the core engine component to a consensus component, and perform non-deterministic scheduling consensus processing on the first to-be-uploaded block through the consensus component.

Specifically, one implementation process that the blockchain node transmits the first to-be-uploaded block from the core engine component to a consensus component, and performs non-deterministic scheduling consensus processing on the first to-be-uploaded block through the consensus component may be as follows: the first to-be-uploaded block in the core engine component is transmitted to a consensus component; a transaction scheduling type is determined through the consensus component; pre-voting processing is performed on the first to-be-uploaded block in the consensus component according to the first transaction execution sequence and the first transaction execution result in the first to-be-uploaded block to obtain a first intermediate pre-voting result if the consensus component determines that the transaction scheduling type is a non-deterministic scheduling type; and result voting processing is performed on the first to-be-uploaded block according to the first intermediate pre-voting result and a first block hash corresponding to the first to-be-uploaded block to obtain a non-deterministic scheduling consensus result for the first to-be-uploaded block.

One implementation process that pre-voting processing is performed on the first to-be-uploaded block in the consensus component according to the first transaction execution sequence and the first transaction execution result to obtain a first intermediate pre-voting result may be as follows: proposal information for the first to-be-uploaded block is generated in the consensus component, and the proposal information is broadcast to consensus nodes in a blockchain network, so that the consensus nodes in the blockchain network generate a second transaction execution result according to the proposal information, and generate first pre-voting information according to the first transaction execution result and the second transaction execution result; the second transaction execution result is obtained after the consensus nodes in the blockchain network execute transactions in the first to-be-uploaded block according to the first transaction execution sequence; second pre-voting information for the first transaction execution result is generated, and the second pre-voting information is broadcast to the consensus nodes in the blockchain network; and a first intermediate pre-voting result is determined according to acquired first pre-voting information and second pre-voting information. The consensus nodes in the blockchain network may be referred to as verification nodes for the first to-be-uploaded block. The first pre-voting information may be either approval vote information or disapproval vote information. Approval vote information represents that the consensus nodes agree the first to-be-uploaded block, while disapproval vote information represents that the consensus nodes disagree the first to-be-uploaded block. In addition to receiving the first pre-voting information transmitted by these verification nodes, the blockchain nodes may also broadcast the second pre-voting information to other verification nodes. One implementation process that the consensus nodes in the blockchain network generate a second transaction execution result according to the proposal information, and generate first pre-voting information according to the first transaction execution result and the second transaction execution result may be as follows: the consensus nodes in the blockchain network perform validity verification on the first to-be-uploaded block and the second transaction execution result according to the verification rules set by the current consensus algorithm, and then first pre-voting information is generated according to a validity verification result, that is, if the validity verification result is a verification pass result, it is determined that the first pre-voting information is approval vote information; and if the validity verification result is a verification fail result, it is determined that the first pre-voting information is disapproval vote information. Validity verification may further include transaction execution result verification (i.e., determining whether the second transaction execution result is the same as the first transaction execution result contained in the first to-be-uploaded block, and if it is the same, the verification passes), block hash verification (the first to-be-uploaded block may contain a block hash, the consensus nodes may generate a verification block hash according to the second transaction execution result, and if the block hash is the same as the verification block hash, the verification passes), and the like, which is generally determined based on the consensus algorithm used by the blockchain network. One implementation process that a first intermediate pre-voting result is determined according to acquired first pre-voting information and second pre-voting information may be as follows: the approval vote information in the first pre-voting information and the second pre-voting information is statistically collected, and if the approval vote information exceeds a pre-approval threshold, the first intermediate pre-voting result is determined as a first intermediate approval vote result. The pre-approval threshold may be half or two-thirds of the number of the consensus nodes in the blockchain network. Similarly, each other consensus nodes may also determine an intermediate pre-voting result according to its second pre-voting information and collected other pre-voting information (such as the first pre-voting information and the second pre-voting information of other consensus nodes).

One implementation process that result voting processing is performed on the first to-be-uploaded block according to the first intermediate pre-voting result and a first block hash corresponding to the first to-be-uploaded block to obtain a non-deterministic scheduling consensus result for the first to-be-uploaded block may be as follows: first voting information for the first to-be-uploaded block is generated according to the first intermediate pre-voting result and the first block hash corresponding to the first to-be-uploaded block; the first voting information contains the first intermediate pre-voting result and the first block hash; the first voting information is transmitted to consensus nodes in a blockchain network; second voting information for the first to-be-uploaded block transmitted by the consensus nodes in the blockchain network is received; the second voting information contains an intermediate pre-voting result determined by the consensus nodes in the blockchain network and the first block hash; and a non-deterministic scheduling consensus result for the first to-be-uploaded block is determined according to the first voting information and the second voting information. The process of generating the first voting information for the first to-be-uploaded block according to the first intermediate pre-voting result and the first block hash corresponding to the first to-be-uploaded block is actually to assemble the first intermediate pre-voting result and the first block hash to obtain first voting information containing the first intermediate pre-voting result and the first block hash. When the consensus nodes in the blockchain network receive the first voting information, they can quickly determine according to the first block hash that the first intermediate pre-voting result in the first voting information is for the first to-be-uploaded block. One implementation process that a non-deterministic scheduling consensus result for the first to-be-uploaded block is determined according to the first voting information and the second voting information may be as follows: an intermediate approval vote result in the first voting information and second voting information (i.e., the first intermediate pre-voting result may be an intermediate approval vote result or an intermediate disapproval vote result, and the intermediate pre-voting result of other consensus nodes may also be an intermediate approval vote result or an intermediate disapproval vote result) is statistically collected, and if the intermediate approval vote result exceeds an approval threshold, the non-deterministic scheduling consensus result is determined as a consensus pass result. The approval threshold may be half or two-thirds of the number of the consensus nodes in the blockchain network.

At S104: If the core engine component determines that the transaction scheduling type is a deterministic scheduling type, transmit the preparatory block in the core engine component to the consensus component, and perform deterministic scheduling consensus processing on the preparatory block through the consensus component and the core engine component, the core engine component being configured to execute transactions in the preparatory block during the deterministic scheduling consensus processing.

Specifically, one implementation process that the preparatory block in the core engine component is transmitted to the consensus component, and deterministic scheduling consensus processing is performed on the preparatory block through the consensus component and the core engine component may be as follows: the preparatory block in the core engine component is transmitted to a consensus component; a transaction scheduling type is determined through the consensus component; proposal information for the preparatory block is generated in the consensus component if the consensus component determines that the transaction scheduling type is a deterministic scheduling type, and the proposal information is broadcast to consensus nodes in a blockchain network, so that the consensus nodes in the blockchain network execute the transactions in the preparatory block in the proposal information according to a deterministic transaction execution sequence; fourth pre-voting information for a third transaction execution result is generated if the third transaction execution result transmitted by the core engine component is received through the consensus component, and the fourth pre-voting information and the third transaction execution result are broadcast to the consensus nodes in the blockchain network, so that the consensus nodes in the blockchain network generate third pre-voting information according to the third transaction execution result; the third transaction execution result is obtained after the core engine component starts to execute the transactions in the preparatory block according to the deterministic transaction execution sequence when the preparatory block is acquired; a second intermediate pre-voting result is determined according to acquired third pre-voting information and fourth pre-voting information; the preparatory block is updated according to the third transaction execution result to obtain a second to-be-uploaded block; and result voting processing is performed on the second to-be-uploaded block according to the second intermediate pre-voting result and a second block hash corresponding to the second to-be-uploaded block to obtain a deterministic scheduling consensus result for the second to-be-uploaded block. The entire process from broadcasting the proposal information to determining the second intermediate pre-voting result may be referred to as pre-voting processing.

After receiving the proposal information, each consensus node may acquire the preparatory block in the proposal information. Since the deterministic scheduling type is adopted in this case, each consensus node may generate a deterministic transaction execution sequence based on the deterministic scheduling algorithm, and then execute the transactions in the preparatory block in the deterministic transaction execution sequence to obtain a transaction execution result generated by the consensus node. Then, when each consensus node receives the fourth pre-voting information and the third transaction execution result, it may compare its generated transaction execution result with the third transaction execution result to obtain third pre-voting information (if it is consistent through comparison, the third pre-voting information is approval vote information, otherwise it is disapproval vote information). Each consensus node may statistically collect the total number of approval votes in the third pre-voting information generated by itself, the fourth pre-voting information received, and the third pre-voting information transmitted by other consensus nodes, and then may determine an intermediate pre-voting result. For the process that the blockchain node determines the second intermediate pre-voting result and the process that each consensus node determines the intermediate pre-voting result, a reference may be made to the process of determining the first intermediate pre-voting result in operation S103 above, which will not be repeated here.

One implementation process that result voting processing is performed on the second to-be-uploaded block according to the second intermediate pre-voting result and a second block hash corresponding to the second to-be-uploaded block to obtain a deterministic scheduling consensus result for the second to-be-uploaded block may be as follows: third voting information for the first to-be-uploaded block is generated according to the second intermediate pre-voting result and the second block hash corresponding to the second to-be-uploaded block; the third first voting information is transmitted to consensus nodes in a blockchain network; fourth voting information for the second to-be-uploaded block transmitted by the consensus nodes in the blockchain network is received; and a deterministic scheduling consensus result for the first to-be-uploaded block is determined according to the third voting information and the fourth voting information. For the processing of performing result voting processing on the second to-be-uploaded block, a reference may be made to the implementation process of performing result voting processing on the first to-be-uploaded block in operation S103 above, which will not be repeated here.

In some embodiments, the blockchain node acquires a configuration information update transaction, and the configuration information update transaction includes updating a transaction scheduling identifier; and a configuration information update contract is called according to the configuration information update transaction if it is determined that the configuration information update transaction passes in consensus, and the transaction scheduling identifier is updated through the configuration information update contract.

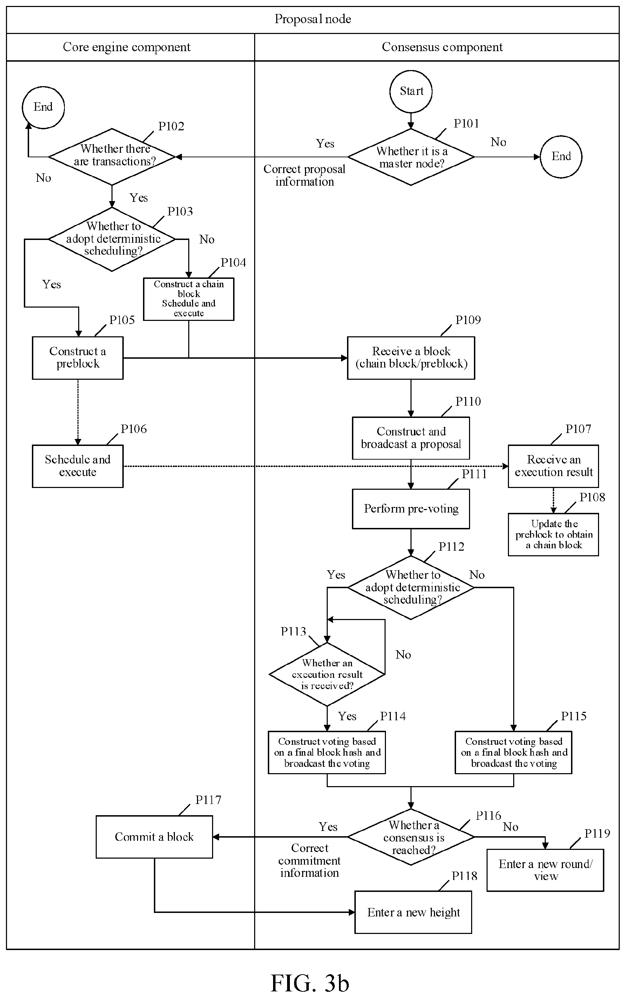

Further, to facilitate the understanding of the process that the proposal node adapts to two types of transaction scheduling algorithms in the consensus process, please jointly refer to FIG. 3b. FIG. 3b is a schematic diagram of a consensus process in which a proposal node adapts to different scheduling algorithms according to an embodiment of the present disclosure. Referring to FIG. 3b, the proposal node includes a consensus component and a core engine component. A signal and message may be transmitted between the consensus component and the core engine component through a message bus (MsgBus). Referring to FIG. 3b, the entire consensus process mainly includes operation P101 to operation P119 as follows.

At P101: The consensus component determines whether the proposal node is a master node; if so, transmit correct proposal information to the core engine component; and if not, the consensus process ends.

Specifically, the master node refers to the proposal node at the current block height in the blockchain network. Depending on the consensus algorithm, the master nodes at different block heights may be different. The determination on the master node may also be understood as the determination on the block output condition above. The correct proposal information refers to a message that MsgBus.ProposeState is true. ProposeState (proposal state) is a message type in MsgBus.

At P102: After receiving the correct proposal information, the core engine component may determine that the proposal node is the current master node and query whether there are unprocessed transactions in the transaction pool; if there are unprocessed transactions in the transaction pool, execute operation P103; and if there are no unprocessed transactions in the transaction pool, the consensus process ends.

At P103: The core engine component determines whether the proposal node adopts deterministic scheduling; if so, execute operation P105; and if not, execute operation P104.

Specifically, determining whether the proposal node adopts deterministic scheduling is to determine the transaction scheduling type of the proposal node; if the transaction scheduling type is a deterministic scheduling type, then deterministic scheduling is adopted; and if the transaction scheduling type is a non-deterministic scheduling type, deterministic scheduling is not adopted. For the specific implementation process of determining the transaction scheduling type, a reference may be made to the description of operation S101 in an embodiment corresponding to FIG. 3a above, which will not be repeated here.

At P104: The core engine component constructs a chain block, schedules and executes transactions when constructing the chain block, and then executes operation P109.

Specifically, the core engine component schedules and executes transactions when constructing the chain block, so the finally obtained chain block may be considered as a complete block that can be written into the blockchain (i.e., the first to-be-uploaded block in an embodiment corresponding to FIG. 3a above). This chain block contains a first transaction execution sequence and a transaction execution result (i.e., the first transaction execution result in an embodiment corresponding to FIG. 3a above). In this case, the hash corresponding to the chain block may be referred to as the final hash of the block, denoted as FinalBlockHash.

At P105: The core engine component constructs a preblock, and then executes operation P106 and operation P109 in parallel.

Specifically, the preblock refers to a block that contains transactions but does not contain a transaction execution result, that is, the preparatory block in an embodiment corresponding to FIG. 3a above. Under the deterministic scheduling algorithm, the sequence in which each consensus node schedules and executes all transactions in a block is consistent, that is, the execution of transactions is deterministic. Therefore, the core engine component may generate a preblock and directly transmit the preblock to the consensus component to construct and broadcast a proposal. Subsequently, the proposal node may schedule and execute transactions in the preblock in parallel with other consensus nodes.

At P106: The core engine component schedules and executes the transactions in the preblock to obtain an execution result, and transmits the execution result to the consensus component.

Specifically, the core engine component generates a deterministic transaction execution sequence according to the deterministic scheduling algorithm, and executes the preblock according to the deterministic transaction execution sequence. The execution result in this case is the third transaction execution result in an embodiment corresponding to FIG. 3a above. During the execution of operation P106, other consensus nodes may execute transactions in the preblock in parallel based on the deterministic transaction execution sequence.

At P107: The consensus component receives the execution result transmitted by the core engine component.

At P108: The consensus component updates the preblock according to the execution result to obtain a chain block.

Specifically, in this case, the chain block is the second to-be-uploaded block in an embodiment corresponding to FIG. 3a above.

At P109: The consensus component receives the block transmitted by the core engine component.

Specifically, the block received by the consensus component may be the chain block generated in operation P104 or the preblock generated in operation P105.

At P110: The consensus component constructs a proposal for the received block and broadcasts the proposal.

Specifically, the consensus component does not need to distinguish whether the received block is the chain block or the preblock in this case, and only needs to construct a consensus proposal for the block. If the proposal information constructed for the preblock is broadcast, the consensus node that receives the proposal information may first execute the preblock and wait for the execution result subsequently broadcast by the proposal node, and then perform voting by comparing the execution result of the proposal node with its generated execution result. If the proposal information constructed for the chain block is broadcast, the consensus node receiving the proposal information may execute the transactions in the chain block based on the first transaction execution sequence in the chain block, and then perform voting by comparing the execution result in the chain block with its generated execution result.

At P111: The consensus component performs pre-voting on the received block; and if the pre-voting passes, execute operation P112. For the pre-voting for the chain block, a reference may be made to the generation process of the first intermediate pre-voting result in an embodiment corresponding to FIG. 3a above, which will not be repeated here. For the pre-voting for the preblock, a reference may be made to the generation process of the second intermediate pre-voting result in an embodiment corresponding to FIG. 3a above, which will not be repeated here.

At P112: The consensus component determines whether the proposal node adopts deterministic scheduling; if so, execute operation P113; and if not, execute operation P115.

Specifically, for the process that the consensus component determines whether the proposal node adopts deterministic scheduling, a reference may be made to the process that the core engine component determines whether the proposal node adopts deterministic scheduling.

At P113: The consensus component determines whether the execution result is received; if so, execute operation P114; and if not, execute operation P113 again.

Specifically, operation P106 to operation P108 and operation P109 to operation P113 are executed in parallel. Therefore, when operation P113 is executed, operation P107 may not executed completely, and the consensus component may periodically confirm whether the execution result is received.

At P114: The consensus component constructs voting based on the final block hash, broadcasts the voting, and executes operation P116.

Specifically, after receiving the execution result, the consensus component may update the preblock to a chain block, thereby using the hash corresponding to the chain block as the FinalBlockHash (final block hash). The consensus component may construct voting based on the FinalBlockHash and broadcast the voting (the broadcast vote may be the third voting information above).

At P115: The consensus component constructs voting based on the final block hash, broadcasts the voting, and executes operation P116.

Specifically, in case of non-deterministic scheduling, the block received by the consensus component is the chain block. The consensus component may directly use the hash corresponding to the received block as the FinalBlockHash (final block hash). The consensus component may construct voting based on the FinalBlockHash, and broadcast the voting (the broadcast voting may be the first voting information above).

At P116: The consensus component determines whether a consensus is reached according to the voting result (i.e., the voting result obtained through the result voting processing above); if a consensus is reached, transmit correct commitment information to the core engine component and execute operation P117; and if no consensus is reached, execute operation P119.

Specifically, the correct commitment information refers to a message that MsgBus.CommitBlock is true. CommitBlock (commit a block) is a message type in MsgBus.

At P117: The core engine component commits the chain block and notifies the consensus component after commitment succeeds.

Specifically, the core engine component may transmit a message that MsgBus.BlockInfo is true to the consensus component. BlockInfo (upload a block) is a message type in MsgBus.

At P118: After receiving the notification information about that the commitment of the chain block succeeds, the consensus component enters a new block height.

Specifically, the new block height refers to the consensus process of the next block.

At P119: The consensus component enters a new round of consensus or a new round of view for a block at a current height.

From operation P101 to operation P119 above, the core engine component in the proposal node performs different processing according to different scheduling algorithms when constructing the block. In case of non-deterministic scheduling, the core engine component constructs a chain block, executes transactions in the block, and then transmits the chain block containing FinalBlockHash to the consensus component. In case of deterministic scheduling, the core engine component constructs a preblock, directly transmits the preblock to the consensus component, and then transmits an execution result with FinalBlockHash to the consensus component after the preblock is executed completely. In addition, the consensus component in the proposal node also needs to perform different processing for different scheduling algorithms. In case of non-deterministic scheduling, because FinalBlockHash is already available, voting may be directly constructed and broadcast. In case of deterministic scheduling, it needs to wait for the core engine component to complete the transactions in the preblock, then constructs voting based on the FinalBlockHash, and broadcasts the voting.

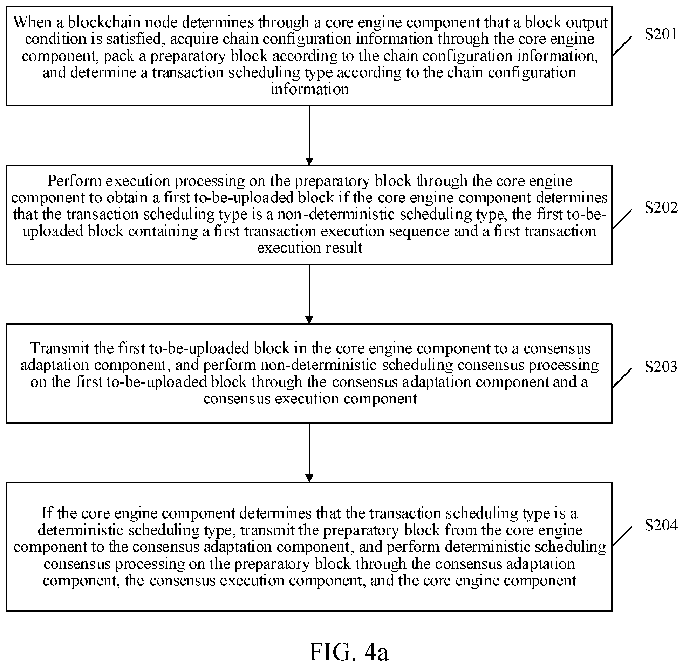

Further, please refer to FIG. 4a. FIG. 4a is a flowchart of a blockchain-based data processing method according to an embodiment of the present disclosure. The data processing method may be executed by a blockchain node (e.g., any blockchain node in the blockchain network in an embodiment corresponding to FIG. 1 above). Description will be made below by taking that the data processing method is executed by the blockchain node as an example. The blockchain-based data processing method may at least include operation S201 to operation S204 as follows.

At S201: When a blockchain node determines through a core engine component that a block output condition is satisfied, acquire chain configuration information through the core engine component, create a preparatory block according to the chain configuration information, and determine a transaction scheduling type according to the chain configuration information.

At S202: Perform execution processing on the preparatory block through the core engine component to obtain a first to-be-uploaded block if the core engine component determines that the transaction scheduling type is a non-deterministic scheduling type, the first to-be-uploaded block containing a first transaction execution sequence and a first transaction execution result.

Specifically, for the implementation of operation S201 to operation S202, a reference may be made to the specific description of operation S101 and operation S102 in an embodiment corresponding to FIG. 3a above, which will not be repeated here.

At S203: Transmit the first to-be-uploaded block in the core engine component to a consensus adaptation component, and perform non-deterministic scheduling consensus processing on the first to-be-uploaded block through the consensus adaptation component and a consensus execution component.

Specifically, the combination of the consensus adaptation component and the consensus execution component may be referred to as the consensus component above. One implementation process that the first to-be-uploaded block in the core engine component is transmitted to a consensus adaptation component, and non-deterministic scheduling consensus processing is performed on the first to-be-uploaded block through the consensus adaptation component and a consensus execution component may be as follows: the first to-be-uploaded block in the core engine component is transmitted to the consensus adaptation component, and a first voting hash for the first to-be-uploaded block is generated in the consensus adaptation component according to the first block hash corresponding to the first to-be-uploaded block; the first to-be-uploaded block and the first voting hash in the consensus adaptation component are transmitted from the consensus adaptation component to the consensus execution component; pre-voting processing is performed on the first to-be-uploaded block in the consensus execution component according to the first transaction execution sequence and the first transaction execution result in the first to-be-uploaded block to obtain a third intermediate pre-voting result; and result voting processing is performed on the first to-be-uploaded block according to the first voting hash and the third intermediate pre-voting result to obtain a non-deterministic scheduling consensus result for the first to-be-uploaded block. For the implementation of performing pre-voting processing and result voting processing on the first to-be-uploaded block, a reference may be made to the implementation process of performing pre-voting processing and result voting processing on the first to-be-uploaded block in operation S103 in an embodiment corresponding to FIG. 3a above. The result voting processing here is performed on the first to-be-uploaded block based on the first voting hash, while in operation S103, the result voting processing is performed on the first to-be-uploaded block directly based on the first block hash of the first to-be-uploaded block.

At S204: If the core engine component determines that the transaction scheduling type is a deterministic scheduling type, transmit the preparatory block from the core engine component to the consensus adaptation component, and perform deterministic scheduling consensus processing on the preparatory block through the consensus adaptation component, the consensus execution component, and the core engine component.

Specifically, one implementation process that the preparatory block in the core engine component is transmitted to the consensus adaptation component, and deterministic scheduling consensus processing is performed on the preparatory block through the consensus adaptation component, the consensus execution component, and the core engine component may be as follows: the preparatory block in the core engine component is transmitted to the consensus adaptation component, the preparatory block is transmitted to the consensus execution component through the consensus adaptation component, proposal information for the preparatory block is generated in the consensus execution component, and the proposal information is broadcast to consensus nodes in a blockchain network, so that the consensus nodes in the blockchain network execute the transactions in the preparatory block in the proposal information according to a deterministic transaction execution sequence; a fourth transaction execution result transmitted by the core engine component is received through the consensus adaptation component; the fourth transaction execution result is obtained after the core engine component executes the transactions in the preparatory block according to the deterministic transaction execution sequence (the deterministic transaction execution sequence is determined based on the deterministic scheduling algorithm); the preparatory block is updated in the consensus adaptation component according to the fourth transaction execution result to obtain a third to-be-uploaded block, and a second voting hash for the third to-be-uploaded block is generated according to a third block hash corresponding to the third to-be-uploaded block; the fourth transaction execution result and the second voting hash in the consensus adaptation component are transmitted to the consensus execution component; fifth pre-voting information for the fourth transaction execution result is generated in the consensus execution component, and the fifth pre-voting information and the fourth transaction execution result are broadcast to the consensus nodes in the blockchain network, so that the consensus nodes in the blockchain network generate sixth pre-voting information according to the fourth transaction execution result (each consensus node may generate the sixth pre-voting information by comparing its generated transaction execution result with the fourth transaction execution result to determine whether they are consistent); a fourth intermediate pre-voting result is determined according to acquired sixth pre-voting information and fifth pre-voting information; and result voting processing is performed on the third to-be-uploaded block according to the second voting hash and the fourth intermediate pre-voting result to obtain a deterministic scheduling consensus result for the third to-be-uploaded block. For the process of determining the fourth intermediate pre-voting result, a reference may be made to the specific process of determining the second intermediate pre-voting result in operation S104 in an embodiment corresponding to FIG. 3a above, which will not be repeated here. The entire process from broadcasting the proposal information to determining the fourth intermediate pre-voting result may be referred to as pre-voting processing. For the implementation process of performing result voting processing on the third to-be-uploaded block, a reference may be made to the process of performing result voting processing on the second to-be-uploaded block in operation S104 in an embodiment corresponding to FIG. 3a above.

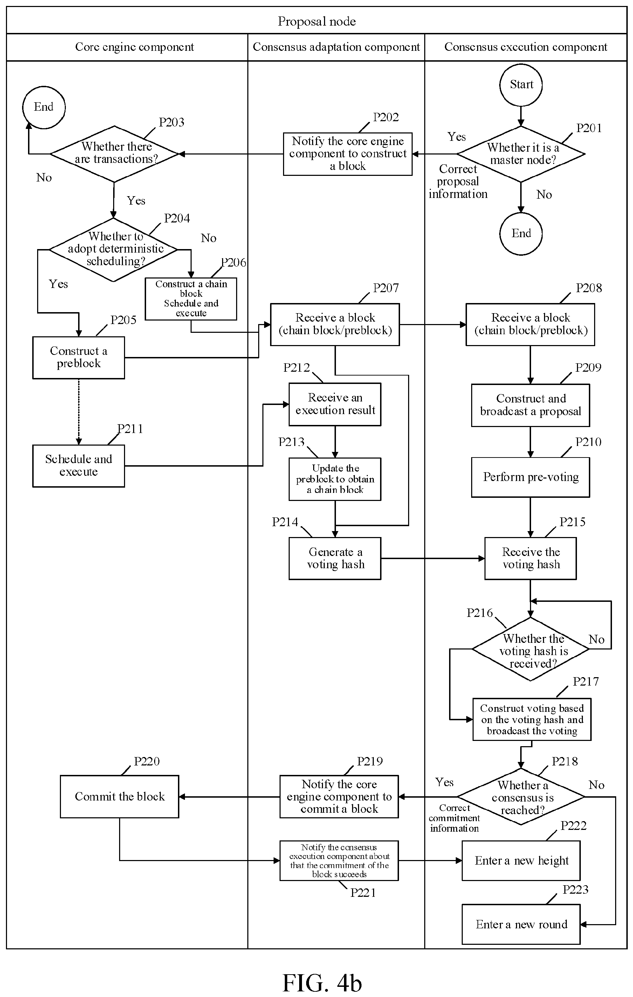

Further, to facilitate the understanding of the process that the proposal node adapts to two types of transaction scheduling algorithms in the consensus process after the consensus adaptation component is added, please jointly refer to FIG. 4b. FIG. 4b is a schematic diagram of a consensus process in which a proposal node adapts to different scheduling algorithms according to an embodiment of the present disclosure. Referring to FIG. 4b, the proposal node includes a consensus adaptation component, a consensus execution component, and a core engine component. The consensus adaptation component, also known as the consensus service layer, is specifically configured to adapt to different scheduling algorithms, thereby unifying the consensus process in the consensus execution component without performing separate processing. A signal and message may be transmitted among the consensus adaptation component, the consensus execution component, and the core engine component through a message bus (MsgBus). Referring to FIG. 4b, the entire consensus process mainly includes operation P201 to operation P223 as follows:

At P201: The consensus execution component determines whether the proposal node is a master node; if so, transmit correct proposal information to the consensus adaptation component; and if not, the consensus process ends. The process of determining whether the proposal node is a master node is actually a process of determining whether the proposal node satisfies a block output condition.

At P202: After receiving the correct proposal information, the consensus adaptation component may notify the core engine component to construct a block.

At P203: After receiving the notification information from the consensus adaptation component, the core engine component may query whether there are unprocessed transactions in a transaction pool; if there are unprocessed transactions in the transaction pool, execute operation P204; and if there are no unprocessed transactions in the transaction pool, the consensus process ends.

At P204: The core engine component determines whether to adopt deterministic scheduling; if so, execute operation P205; and if not, execute operation P206.

At P205: The core engine component constructs a preblock, and then executes operation P207 and operation P211 in parallel.

Specifically, the preblock refers to a block that contains transactions but does not contain a transaction execution result, that is, the preparatory block in an embodiment corresponding to FIG. 4a above. Under the deterministic scheduling algorithm, the sequence in which each consensus node schedules and executes all transactions in a block is consistent, that is, the execution of transactions is deterministic. Therefore, the core engine component may generate a preblock and directly transmit the preblock to the consensus adaptation component, then the consensus adaptation component transmits the preblock to the consensus execution component, and the consensus execution component constructs and broadcasts a proposal. Subsequently, the proposal node may schedule and execute transactions in the preblock in parallel with other consensus nodes.

At P206: The core engine component constructs a chain block, schedules and executes transactions when constructing the chain block, and then executes operation P207. After the transactions are executed completely, a first transaction execution result may be added to the chain block, and the chain block in this case is the first to-be-uploaded block above.

At P207: The consensus adaptation component receives the block transmitted by the core engine component and transmits the block to the consensus execution component; if the received block is a chain block, execute operation P214; and if the received block is a preblock, execute operation P212.

At P208: If the consensus execution component receives the block transmitted by the consensus adaptation component, execute operation P209.

At P209: The consensus execution component constructs a proposal for the received block and broadcasts the proposal.

At P210: The consensus execution component performs pre-voting on the received block; and if the pre-voting passes, execute operation P215.

For the pre-voting for the chain block, a reference may be made to the generation process of the third intermediate pre-voting result in an embodiment corresponding to FIG. 4a above, which will not be repeated here. For the pre-voting for the preblock, a reference may be made to the generation process of the fourth intermediate pre-voting result in an embodiment corresponding to FIG. 4a above, which will not be repeated here.

At P211: The core engine component schedules and executes the transactions in the preblock to obtain an execution result, and transmits the execution result to the consensus adaptation component.

At P212: If the consensus adaptation component receives the execution result transmitted by the core engine component, execute operation P213.

At P213: The consensus adaptation component updates the preblock according to the execution result to obtain a chain block.

At P214: The consensus adaptation component generates a voting hash and transmits the voting hash to the consensus execution component.

Specifically, if the block initially received by the consensus adaptation component is a chain block, the consensus adaptation component directly generates a voting hash based on the block hash of the chain block; and if the block initially received by the consensus adaptation component is a preblock, the consensus adaptation component waits for receiving the execution, updates the preblock, and then generates the voting hash according to the block hash of the obtained chain block.

At P215: If the consensus execution component receives the voting hash, execute operation P216.

At P216: The consensus execution component determines whether the voting hash is received; if so, execute operation P217; and if not, execute operation P216 again.

At P217: The consensus execution component constructs voting based on the voting hash, broadcasts the voting, and executes operation P218.

In case of non-deterministic scheduling, for the process of constructing and broadcasting voting in operation P217, a reference may be made to the process of performing result voting processing on the first to-be-uploaded block in an embodiment corresponding to FIG. 4a above. In case of deterministic scheduling, for the process of constructing and broadcasting voting in operation P217, a reference may be made to the process of performing result voting processing on the third to-be-uploaded block in an embodiment corresponding to FIG. 4a above.

At P218: The consensus execution component determines whether a consensus is reached according to the voting result; if a consensus is reached, transmit correct commitment information to the consensus adaptation component and execute operation P219; and if no consensus is reached, execute operation P223.

Specifically, the correct commitment information refers to a message that MsgBus.CommitBlock is true. CommitBlock (commit a block) is a message type in MsgBus.

At P219: The consensus adaptation component notifies the core engine component to commit the block.

At P220: The core engine component commits the chain block and notifies the consensus adaptation component after commitment succeeds.

At P221: The consensus adaptation component notifies the consensus execution component about that the commitment of the block succeeds.

At P222: After receiving the notification information about that the commitment of the chain block succeeds, the consensus execution component enters a new height.

At P223: The consensus execution component enters a new round of consensus or a new round of view for a block at a current height.

In operation P201 to operation P223 above, based on the implementation of operation P101 to operation P119 in an embodiment corresponding to FIG. 3b above, a consensus adaptation component is introduced to adapt to deterministic scheduling and non-deterministic scheduling, the internal process of the consensus execution component is unified in this case, and there is no need to perform separate processing.

Accordingly, using the method provided in this embodiment of the present disclosure, the consensus execution component no longer needs to directly interact with the core engine component, but interacts with the intermediate consensus adaptation component and the core engine component. The consensus adaptation component can shield the differences caused by deterministic scheduling and non-deterministic scheduling. The consensus execution component only needs to broadcast a proposal first, and then perform voting according to the execution result and the voting hash acquired from the consensus adaptation component, thereby accelerating the processing speed of the consensus execution component.

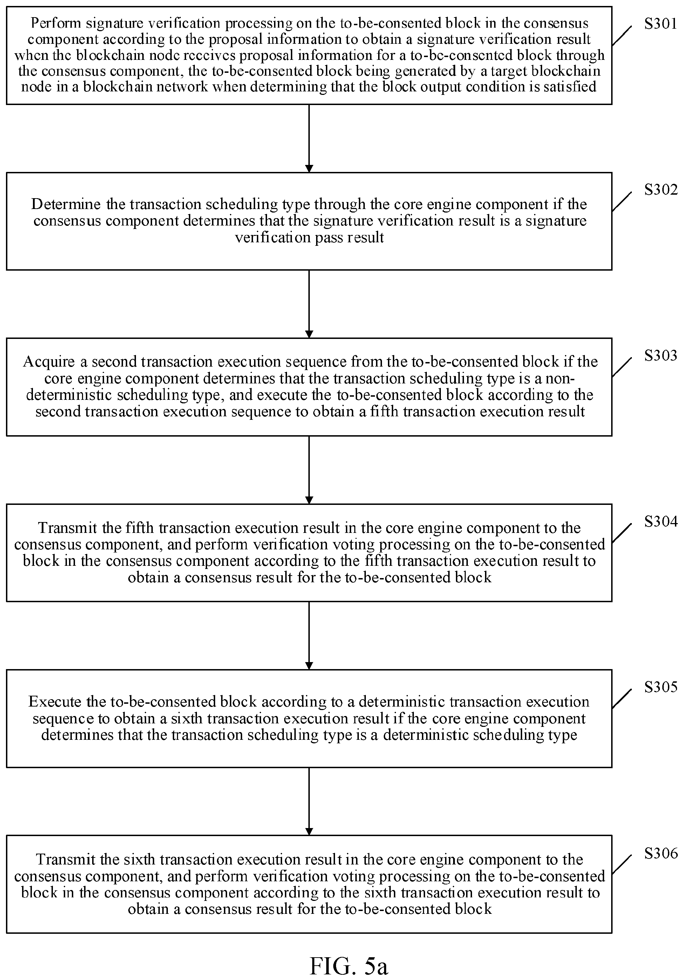

Further, please refer to FIG. 5a. FIG. 5a is a flowchart of a blockchain-based data processing method according to an embodiment of the present disclosure. The data processing method may be executed by a blockchain node (e.g., any blockchain node in the blockchain network in an embodiment corresponding to FIG. 1 above). Description will be made below by taking that the data processing method is executed by the blockchain node as an example. The blockchain-based data processing method may at least include operation S301 to operation S306 as follows.

At S301: Perform signature verification processing on a to-be-consented block in the consensus component according to proposal information for the to-be-consented block to obtain a signature verification result when the blockchain node receives the proposal information through the consensus component, the to-be-consented block being generated by a target blockchain node in a blockchain network when determining that the block output condition is satisfied.

Specifically, when a blockchain node serves as a verification node or a consensus node in the blockchain network, it needs to perform consensus processing on the to-be-uploaded block after receiving proposal information. The target blockchain node refers to the current proposal node or master node in the blockchain network. The process of signature verification processing may be as follows: a public key of the target blockchain node is acquired and signature verification processing is performed on a signature corresponding to the proposal information.

At S302: Determine the transaction scheduling type through the core engine component if the consensus component determines that the signature verification result is a signature verification pass result.

Specifically, for the implementation of operation S302, a reference may be made to the process of determining the transaction scheduling type in operation S101 in an embodiment corresponding to FIG. 3a above, which will not be repeated here.

At S303: Acquire a second transaction execution sequence from the to-be-consented block if the core engine component determines that the transaction scheduling type is a non-deterministic scheduling type, and execute the to-be-consented block according to the second transaction execution sequence to obtain a fifth transaction execution result.

Specifically, in case of the non-deterministic scheduling type, the target blockchain node will execute transactions in a block when constructing the block. Therefore, the to-be-consented block in this case contains a target transaction execution result and a second transaction execution sequence. In order to ensure the correctness of subsequent verification voting processing, the blockchain node needs to execute transactions in the to-be-consented block according to the second transaction execution sequence.

At S304: Transmit the fifth transaction execution result in the core engine component to the consensus component, and perform verification voting processing on the to-be-consented block in the consensus component according to the fifth transaction execution result to obtain a consensus result for the to-be-consented block.

Specifically, verification voting processing refers to a process of verifying the validity of the to-be-consented block, then performing voting on the to-be-consented block according to a validity verification result, and broadcasting it to other consensus nodes in the blockchain network, and then determining a consensus result for the to-be-consented block according to voting results of other consensus nodes and the voting result of the blockchain node. Validity verification includes various verification methods, such as verifying whether the fifth transaction execution result is the same as the target transaction execution result contained in the to-be-consented block; or verifying whether the verification block hash calculated according to the fifth transaction execution result is the same as the block hash contained in the to-be-consented block. Similarly, the verification voting processing may include pre-voting processing and result voting processing. The blockchain node may obtain the intermediate pre-voting result mentioned in an embodiment corresponding to FIG. 3a above through pre-voting processing. The blockchain node may obtain the consensus result in case of non-deterministic scheduling through result voting processing. For the process of determining the consensus result in case of non-deterministic scheduling, a reference may be made to the process of determining the non-deterministic scheduling consensus result in an embodiment corresponding to FIG. 3a above.

At S305: Execute the to-be-consented block according to a deterministic transaction execution sequence to obtain a sixth transaction execution result if the core engine component determines that the transaction scheduling type is a deterministic scheduling type.

Specifically, the deterministic transaction execution sequence refers to the sequence in which the target blockchain node packs transactions into the to-be-consented block. The deterministic transaction execution sequence may be determined through the deterministic scheduling algorithm.

At S306: Transmit the sixth transaction execution result in the core engine component to the consensus component, and perform verification voting processing on the to-be-consented block in the consensus component according to the sixth transaction execution result to obtain a consensus result for the to-be-consented block.

Similarly, the verification voting processing may include pre-voting processing and result voting processing. The blockchain node may obtain the intermediate pre-voting result mentioned in an embodiment corresponding to FIG. 3a above through pre-voting processing. The blockchain node may obtain the consensus result in case of deterministic scheduling through result voting processing. For the process of determining the consensus result in case of deterministic scheduling, a reference may be made to the process of determining the deterministic scheduling consensus result in an embodiment corresponding to FIG. 3a above.

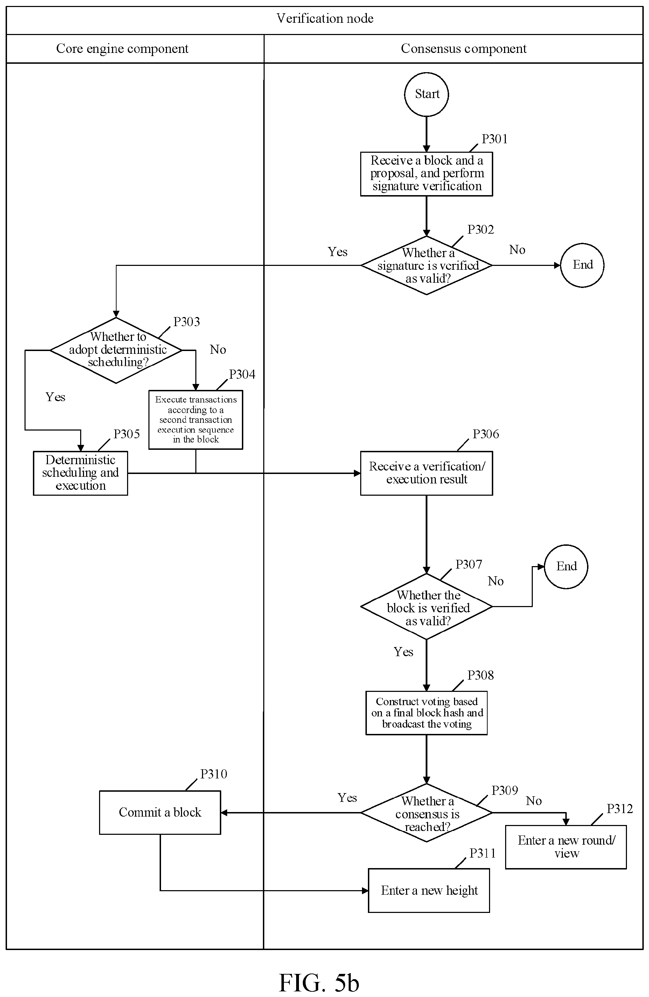

Further, to facilitate the understanding of the process that the verification node adapts to two types of transaction scheduling algorithms in the consensus process, please jointly refer to FIG. 5b. FIG. 5b is a schematic diagram of a consensus process in which a verification node adapts to different scheduling algorithms according to an embodiment of the present disclosure. Referring to FIG. 5b, the verification node includes a consensus component and a core engine component. A signal and message may be transmitted between the consensus component and the core engine component through a message bus (MsgBus). Referring to FIG. 5b, the entire consensus process of the verification node mainly includes operation P301 to operation P312 as follows:

At P301: The consensus component receives a block and a proposal for the block, and performs signature verification on the proposal to obtain a signature verification result.

Specifically, for the implementation of operation P301, a reference may be made to the description of operation S301 in an embodiment corresponding to FIG. 5a above.

At P302: The consensus component determines whether the proposal is valid according to the signature verification result; if it is valid, execute operation P303; and if it is invalid, the consensus process ends.

At P303: The core engine component receives valid proposal information transmitted by the consensus component and further determines whether to adopt deterministic scheduling; if so, execute operation P305; and if not, execute operation P304.

At P304: The core engine component executes transactions according to a second transaction execution sequence in the block and verifies the block.

Specifically, for the implementation of operation P304, a reference may be made to the description of operation S303 above.

At P305: The core engine component performs scheduling execution on the transactions in the block and verifies the block.

Specifically, for the implementation of operation P305, a reference may be made to the description of operation S305 in an embodiment corresponding to FIG. 5a.

At P306: The consensus component receives a verification/execution result transmitted by the core engine component.

Specifically, regardless of whether the consensus component receives the verification/execution result obtained in operation P304 or the verification/execution result obtained in operation P305, subsequent operations can be executed normally.

At P307: The consensus component determines whether the block is valid according to the received verification/execution result; if it is valid, execute operation P308; and if it is invalid, the consensus process ends.

At P308: The consensus component constructs voting based on a final block hash, and then broadcasts the voting.

Specifically, for the process of constructing and broadcasting the voting based on the final block hash, a reference may be made to the implementation process of operation P114 or operation P115 in an embodiment corresponding to FIG. 3b above.

At P309: The consensus component determines whether a consensus is reached according to the voting result; if a consensus is reached, transmit correct commitment information to the core engine component and execute operation P310; and if no consensus is reached, execute operation P312.

At P310: The core engine component commits the block and notifies the consensus component after commitment succeeds.

At P311: After receiving the notification information about that the commitment of the chain block succeeds, the consensus component enters a new height.

At P312: The consensus component enters a new round of consensus or a new round of view for a block at a current height.

Specifically, for the implementation process of operation P309 to operation P312, a reference may be made to the description of operation P116 to operation P119 in FIG. 3b above.

By adopting the method provided in this embodiment of the present disclosure, as a verification node, the blockchain node may adapt to deterministic scheduling and non-deterministic scheduling through the core engine component, and then determine the execution method for the to-be-consented block to obtain the transaction execution result for the block. The consensus component only needs to complete the verification voting processing according to the transaction execution result transmitted by the core engine component. Therefore, the blockchain node can choose different scheduling algorithms based on different functional scenarios, thereby improving the performance of the blockchain network.

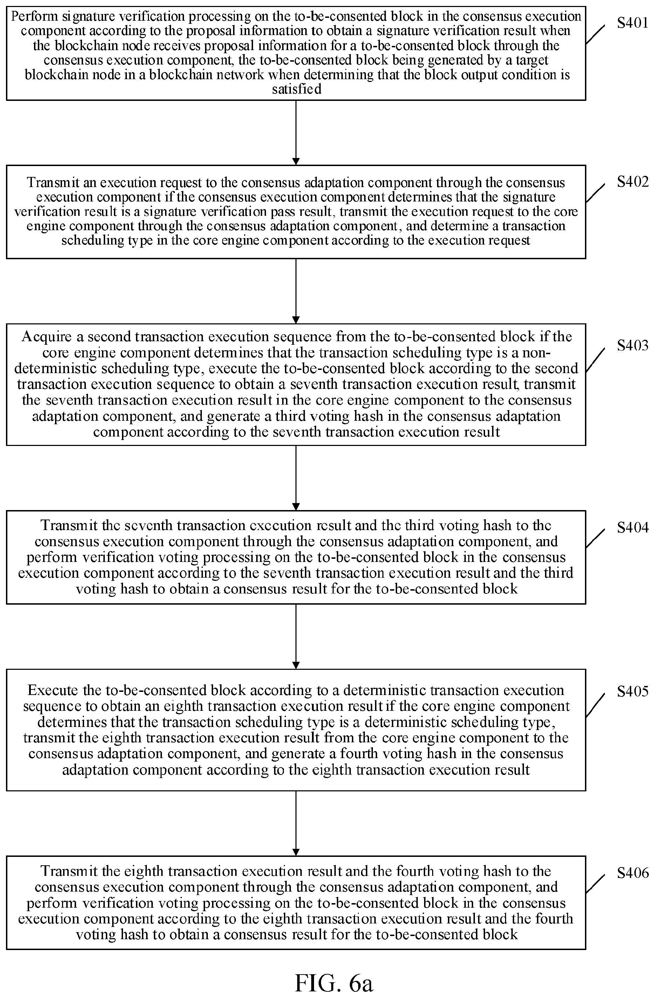

Further, please refer to FIG. 6a. FIG. 6a is a flowchart of a blockchain-based data processing method according to an embodiment of the present disclosure. The data processing method may be executed by a blockchain node (e.g., any blockchain node in the blockchain network in an embodiment corresponding to FIG. 1 above). Description will be made below by taking that the data processing method is executed by the blockchain node as an example. The blockchain-based data processing method may at least include operation S401 to operation S406 as follows.

At S401: Perform signature verification processing on a to-be-consented block in the consensus execution component according to proposal information for the to-be-consented block to obtain a signature verification result when the blockchain node receives the proposal information through the consensus execution component, the to-be-consented block being generated by a target blockchain node in a blockchain network when the block output condition is satisfied.

At S402: Transmit an execution request to the consensus adaptation component through the consensus execution component if the consensus execution component determines that the signature verification result is a signature verification pass result, transmit the execution request to the core engine component through the consensus adaptation component, and determine a transaction scheduling type in the core engine component according to the execution request.

At S403: Acquire a second transaction execution sequence from the to-be-consented block if the core engine component determines that the transaction scheduling type is a non-deterministic scheduling type, execute the to-be-consented block according to the second transaction execution sequence to obtain a seventh transaction execution result, transmit the seventh transaction execution result in the core engine component to the consensus adaptation component, and generate a third voting hash in the consensus adaptation component according to the seventh transaction execution result.

At S404: Transmit the seventh transaction execution result and the third voting hash to the consensus execution component through the consensus adaptation component, and perform verification voting processing on the to-be-consented block in the consensus execution component according to the seventh transaction execution result and the third voting hash to obtain a consensus result for the to-be-consented block.

At S405: Execute the to-be-consented block according to a deterministic transaction execution sequence to obtain an eighth transaction execution result if the core engine component determines that the transaction scheduling type is a deterministic scheduling type, transmit the eighth transaction execution result from the core engine component to the consensus adaptation component, and generate a fourth voting hash in the consensus adaptation component according to the eighth transaction execution result.

At S406: Transmit the eighth transaction execution result and the fourth voting hash to the consensus execution component through the consensus adaptation component, and perform verification voting processing on the to-be-consented block in the consensus execution component according to the eighth transaction execution result and the fourth voting hash to obtain a consensus result for the to-be-consented block.

In operation S401 to operation S406 above, based on the implementation of operation S301 to operation S306 in an embodiment corresponding to FIG. 5a above, a consensus adaptation component is introduced to adapt to deterministic scheduling and non-deterministic scheduling, the internal process of the consensus execution component is unified in this case, and there is no need to perform separate processing.

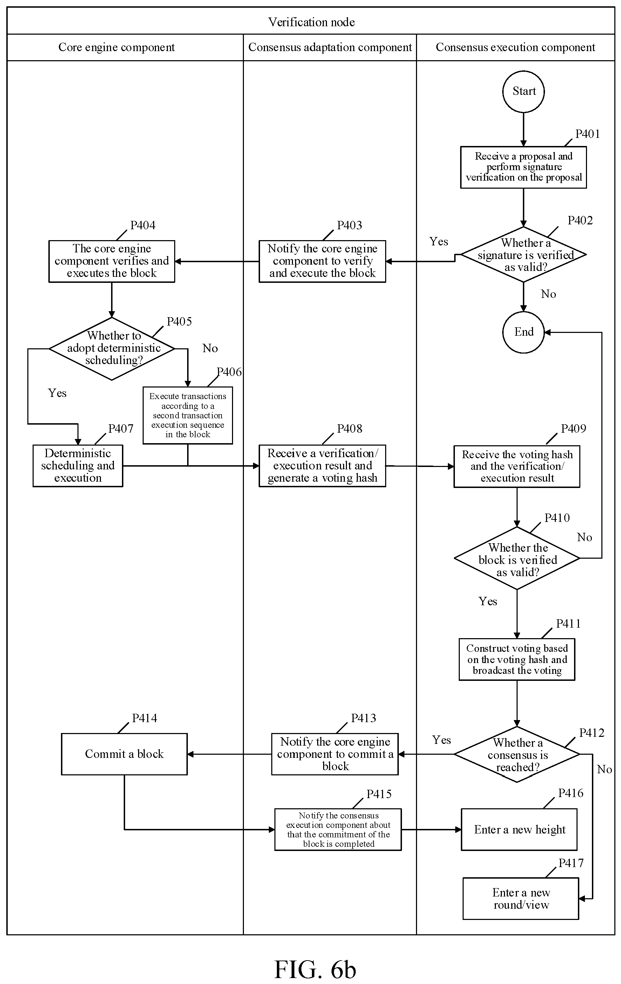

Further, to facilitate the understanding of the process that the verification node adapts to two types of transaction scheduling algorithms in the consensus process after the consensus adaptation component is added, please jointly refer to FIG. 6b. FIG. 6b is a schematic diagram of a consensus process in which a verification node adapts to different scheduling algorithms according to an embodiment of the present disclosure. Referring to FIG. 6b, the verification node includes a consensus adaptation component, a consensus execution component, and a core engine component. The combination of the consensus adaptation component and the consensus execution component may be referred to as a consensus component. The consensus adaptation component, also known as the consensus service layer, is specifically configured to adapt to different scheduling algorithms, thereby unifying the consensus process in the consensus execution component without performing separate processing. A signal and message may be transmitted among the consensus adaptation component, the consensus execution component, and the core engine component through a message bus (MsgBus). Referring to FIG. 6b, the entire consensus process mainly includes operation P401 to operation P417 as follows.

At P401: The consensus execution component receives a block and a proposal for the block, and performs signature verification on the proposal to obtain a signature verification result.

At P402: The consensus execution component determines whether the proposal is valid according to the signature verification result; if it is valid, execute operation P403; and if it is invalid, the consensus process ends.

Specifically, for the implementation of operation P401 to operation P402, a reference may be made to the implementation of operation P301 to operation P302 in an embodiment corresponding to FIG. 5b above.

At P403: The consensus adaptation component receives valid signature verification information transmitted by the consensus execution component, and notifies the core engine component to verify and execute the block.

At P404: The core engine component receives block verification and execution notification information transmitted by the consensus adaptation component, and executes operation P405.

At P405: The core engine component determines whether to adopt deterministic scheduling; if so, execute operation P407; and if not, execute operation P406.

At P406: The core engine component executes transactions according to a second transaction execution sequence in the block and verifies the block.

At P407: The core engine component performs scheduling execution on the transactions in the block and verifies the block.

Specifically, for the implementation of operation P405 to operation P407, a reference may be made to the implementation of operation P303 to operation P305 in an embodiment corresponding to FIG. 5b above.

At P408: The consensus adaptation component receives a verification/execution result transmitted by the core engine component and generates a voting hash.

Specifically, for the implementation of operation P408, a reference may be made to the description of operation P214 in an embodiment corresponding to FIG. 4b above.

At P409: The consensus execution component receives the voting hash, and the verification/execution result.

At P410: The consensus execution component determines whether the block is valid according to the received verification/execution result; if it is valid, execute operation P411; and if it is invalid, the consensus process ends.

At P411: The consensus execution component constructs voting based on the voting hash, and then broadcasts the voting.

At P412: The consensus component determines whether a consensus is reached according to the voting result; if a consensus is reached, execute operation P413; and if no consensus is reached, execute operation P417.

Specifically, for the implementation of operation P409 to operation P412, a reference may be made to the implementation of operation P307 to operation P309 in an embodiment corresponding to FIG. 5b above.

At P413: The consensus adaptation component notifies the core engine component to commit the block.

At P414: The core engine component commits the block and notifies the consensus adaptation component after commitment succeeds.

At P415: The consensus adaptation component notifies the consensus execution component about that the commitment of the block is completed.

At P416: After receiving the notification information about that the commitment of the block succeeds, the consensus execution component enters a new height.

At P417: The consensus execution component enters a new round of consensus or a new round of view for a block at a current height.

Accordingly, by adopting the method provided in this embodiment of the present disclosure, after the core engine component verifies and executes the block, the execution result with the voting hash is returned to the consensus execution component through the consensus adaptation component, and then the consensus execution component constructs and broadcasts voting. The actual consensus execution component is not configured to perceive the process differences caused by different scheduling algorithms, the functional logic of the consensus execution component is purer and simpler, and there is no need to consider the differences caused by different logics of other components.

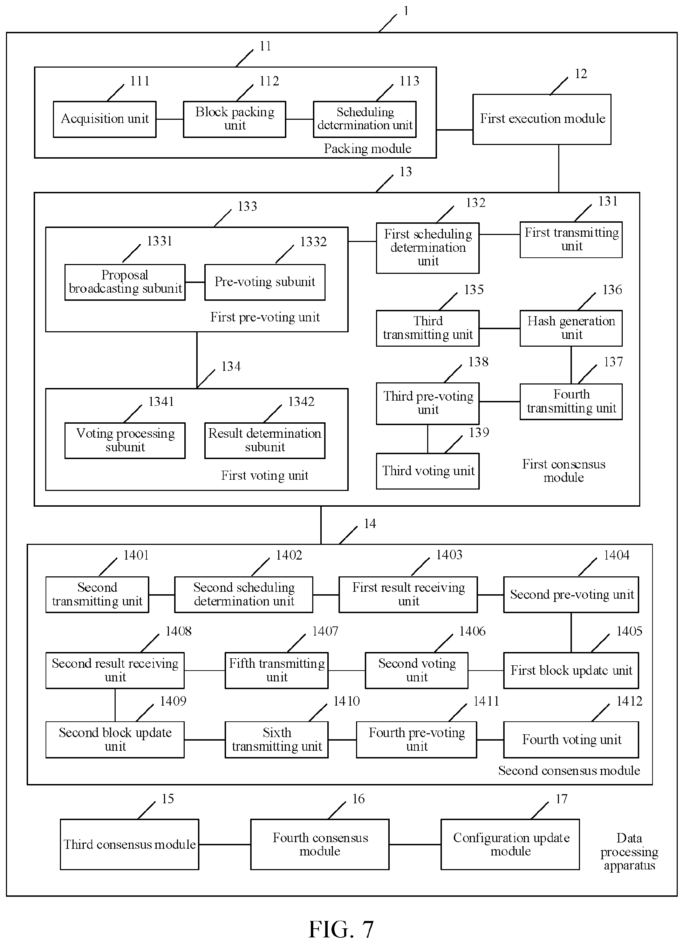

Please refer to FIG. 7. FIG. 7 is a schematic structural diagram of a data processing apparatus according to an embodiment of the present disclosure. The data processing apparatus may be a computer program (including program code) running in a computer device. For example, the data processing apparatus may be application software. The apparatus can be used for executing the corresponding operations in the data processing method according to an embodiment of the present disclosure. Referring to FIG. 7, the data processing apparatus 1 may include a packing module 11, a first execution module 12, a first consensus module 13, and a second consensus module 14.

The packing module 11 is configured to, when it is determined through a core engine component that a block output condition is satisfied, acquire chain configuration information through the core engine component, create a preparatory block according to the chain configuration information, and determine a transaction scheduling type according to the chain configuration information. The block output condition refers to a condition that the blockchain node is selected as a proposal node for a current round of blocks.

The first execution module 12 is configured to perform execution processing on the preparatory block through the core engine component to obtain a first to-be-uploaded block if the core engine component determines that the transaction scheduling type is a non-deterministic scheduling type. The first to-be-uploaded block contains a first transaction execution sequence and a first transaction execution result.

The first consensus module 13 is configured to transmit the first to-be-uploaded block in the core engine component to a consensus component, and perform non-deterministic scheduling consensus processing on the first to-be-uploaded block through the consensus component.

The second consensus module 14 is configured to, if the core engine component determines that the transaction scheduling type is a deterministic scheduling type, transmit the preparatory block in the core engine component to the consensus component, and perform deterministic scheduling consensus processing on the preparatory block through the consensus component and the core engine component. The core engine component being configured to execute transactions in the preparatory block during the deterministic scheduling consensus processing.

For the specific implementations of the packing module 11, the first execution module 12, the first consensus module 13, and the second consensus module 14, please refer to the description of operation S101 to operation S104 in an embodiment corresponding to FIG. 3a above, which will not be repeated here.

The chain configuration information includes block configuration information and a transaction scheduling identifier.

The packing module 11 includes an acquisition unit 111, a block packing unit 112, and a scheduling determination unit 113.

The acquisition unit 111 is configured to acquire the block configuration information and the transaction scheduling identifier through the core engine component.

The block packing unit 112 is configured to acquire to-be-packed transactions from a transaction pool according to the block configuration information, and pack the to-be-packed transactions according to the block configuration information to obtain a preparatory block.

The scheduling determination unit 113 is configured to determine that the transaction scheduling type is a non-deterministic scheduling type if the transaction scheduling identifier is a non-deterministic scheduling identifier.

The scheduling determination unit 113 is further configured to determine that the transaction scheduling type is a deterministic scheduling type if the transaction scheduling identifier is a deterministic scheduling identifier.

For the specific implementations of the acquisition unit 111, the block packing unit 112, and the scheduling determination unit 113, please refer to the description of operation S101 in an embodiment corresponding to FIG. 3a above, which will not be repeated here.

The first consensus module 13 includes a first transmitting unit 131, a first scheduling determination unit 132, a first pre-voting unit 133, and a first voting unit 134.

The first transmitting unit 131 is configured to transmit the first to-be-uploaded block in the core engine component to a consensus component.

The first scheduling determination unit 132 is configured to determine a transaction scheduling type through the consensus component.

The first pre-voting unit 133 is configured to perform pre-voting processing on the first to-be-uploaded block in the consensus component according to the first transaction execution sequence and the first transaction execution result in the first to-be-uploaded block to obtain a first intermediate pre-voting result if the consensus component determines that the transaction scheduling type is a non-deterministic scheduling type.

The first voting unit 134 is configured to perform result voting processing on the first to-be-uploaded block according to the first intermediate pre-voting result and a first block hash corresponding to the first to-be-uploaded block to obtain a non-deterministic scheduling consensus result for the first to-be-uploaded block.

For the specific implementations of the first transmitting unit 131, the first scheduling determination unit 132, the first pre-voting unit 133, and the first voting unit 134, please refer to the description of operation S103 in an embodiment corresponding to FIG. 3a above, which will not be repeated here.

The first pre-voting unit 133 includes a proposal broadcasting subunit 1331 and a pre-voting subunit 1332.

The proposal broadcasting subunit 1331 is configured to generate proposal information for the first to-be-uploaded block in the consensus component, and broadcast the proposal information to consensus nodes in a blockchain network, so that the consensus nodes in the blockchain network generate a second transaction execution result according to the proposal information, and generate first pre-voting information according to the first transaction execution result and the second transaction execution result. The second transaction execution result is obtained after the consensus nodes in the blockchain network execute transactions in the first to-be-uploaded block according to the first transaction execution sequence.

The pre-voting subunit 1332 is configured to generate second pre-voting information for the first transaction execution result, and broadcast the second pre-voting information to the consensus nodes in the blockchain network.

The pre-voting subunit 1332 is further configured to determine a first intermediate pre-voting result according to acquired first pre-voting information and second pre-voting information.

For the specific implementations of the proposal broadcasting subunit 1331 and the pre-voting subunit 1332, please refer to the description of operation S103 in an embodiment corresponding to FIG. 3a above, which will not be repeated here.

The first voting unit 134 includes a voting processing subunit 1341 and a result determination subunit 1342.

The voting processing subunit 1341 is configured to generate first voting information for the first to-be-uploaded block according to the first intermediate pre-voting result and the first block hash corresponding to the first to-be-uploaded block. The first voting information contains the first intermediate pre-voting result and the first block hash.

The voting processing subunit 1341 is further configured to transmit the first voting information to consensus nodes in a blockchain network.

The voting processing subunit 1341 is further configured to receive second voting information for the first to-be-uploaded block transmitted by the consensus nodes in the blockchain network. The second voting information contains an intermediate pre-voting result determined by the consensus nodes in the blockchain network and the first block hash.

The result determination subunit 1342 is configured to determine a non-deterministic scheduling consensus result for the first to-be-uploaded block according to the first voting information and the second voting information.

For the specific implementations of the voting processing subunit 1341 and the result determination subunit 1342, please refer to the description of operation S103 in an embodiment corresponding to FIG. 3a above, which will not be repeated here.

The second consensus module 14 includes a second transmitting unit 1401, a second scheduling determination unit 1402, a first result receiving unit 1403, a second pre-voting unit 1404, a first block update unit 1405, and a second voting unit 1406.

The second transmitting unit 1401 is configured to transmit the preparatory block in the core engine component to a consensus component.

The second scheduling determination unit 1402 is configured to determine a transaction scheduling type through the consensus component.

The second pre-voting unit 1404 is configured to generate proposal information for the preparatory block in the consensus component if the consensus component determines that the transaction scheduling type is a deterministic scheduling type, and broadcast the proposal information to consensus nodes in a blockchain network, so that the consensus nodes in the blockchain network execute the transactions in the preparatory block in the proposal information according to a deterministic transaction execution sequence.

The first result receiving unit 1403 is configured to generate fourth pre-voting information for a third transaction execution result if the third transaction execution result transmitted by the core engine component is received through the consensus component, and broadcast the fourth pre-voting information and the third transaction execution result to the consensus nodes in the blockchain network, so that the consensus nodes in the blockchain network generate third pre-voting information according to the third transaction execution result. The third transaction execution result is obtained after the core engine component starts to execute the transactions in the preparatory block according to the deterministic transaction execution sequence when the preparatory block is acquired.

The second pre-voting unit 1404 is further configured to determine a second intermediate pre-voting result according to acquired third pre-voting information and fourth pre-voting information.

The first block update unit 1405 is configured to update the preparatory block according to the third transaction execution result to obtain a second to-be-uploaded block.

The second voting unit 1406 is configured to perform result voting processing on the second to-be-uploaded block according to the second intermediate pre-voting result and a second block hash corresponding to the second to-be-uploaded block to obtain a deterministic scheduling consensus result for the second to-be-uploaded block.

For the specific implementations of the second transmitting unit 1401, the second scheduling determination unit 1402, the first result receiving unit 1403, the second pre-voting unit 1404, the first block update unit 1405, and the second voting unit 1406, please refer to the description of operation S104 in an embodiment corresponding to FIG. 3a above, which will not be repeated here.

The consensus component includes a consensus adaptation component and a consensus execution component.

The first consensus module 13 includes a third transmitting unit 135, a hash generation unit 136, a fourth transmitting unit 137, a third pre-voting unit 138, and a third voting unit 139.

The third transmitting unit 135 is configured to transmit the first to-be-uploaded block in the core engine component to the consensus adaptation component.

The hash generation unit 136 is configured to generate a first voting hash for the first to-be-uploaded block in the consensus adaptation component according to the first block hash corresponding to the first to-be-uploaded block.

The fourth transmitting unit 137 is configured to transmit the first to-be-uploaded block and the first voting hash in the consensus adaptation component from the consensus adaptation component to the consensus execution component.

The third pre-voting unit 138 is configured to perform pre-voting processing on the first to-be-uploaded block in the consensus execution component according to the first transaction execution sequence and the first transaction execution result in the first to-be-uploaded block to obtain a third intermediate pre-voting result.

The third voting unit 139 is configured to perform result voting processing on the first to-be-uploaded block according to the first voting hash and the third intermediate pre-voting result to obtain a non-deterministic scheduling consensus result for the first to-be-uploaded block.

For the specific implementations of the third transmitting unit 135, the hash generation unit 136, the fourth transmitting unit 137, the third pre-voting unit 138, and the third voting unit 139, please refer to the description of operation S203 in an embodiment corresponding to FIG. 4a above, which will not be repeated here.

The consensus component includes a consensus adaptation component and a consensus execution component.

The second consensus module 14 includes a fifth transmitting unit 1407, a second result receiving unit 1408, a second block update unit 1409, a sixth transmitting unit 1410, a fourth pre-voting unit 1411, and a fourth voting unit 1412.

The fifth transmitting unit 1407 is configured to transmit the preparatory block in the core engine component to the consensus adaptation component.

The fourth pre-voting unit 1411 is configured to transmit the preparatory block to the consensus execution component through the consensus adaptation component, generate proposal information for the preparatory block in the consensus execution component, and broadcast the proposal information to consensus nodes in a blockchain network, so that the consensus nodes in the blockchain network execute the transactions in the preparatory block in the proposal information according to a deterministic transaction execution sequence.

The second result receiving unit 1408 is configured to receive a fourth transaction execution result transmitted by the core engine component through the consensus adaptation component. The fourth transaction execution result is obtained after the core engine component executes the transactions in the preparatory block according to the deterministic transaction execution sequence.

The second block update unit 1409 is configured to update the preparatory block in the consensus adaptation component according to the fourth transaction execution result to obtain a third to-be-uploaded block, and generate a second voting hash for the third to-be-uploaded block according to a third block hash corresponding to the third to-be-uploaded block.

The sixth transmitting unit 1410 is configured to transmit the fourth transaction execution result and the second voting hash in the consensus adaptation component to the consensus execution component.

The fourth pre-voting unit 1411 is further configured to generate fifth pre-voting information for the fourth transaction execution result in the consensus execution component, and broadcast the fifth pre-voting information and the fourth transaction execution result to the consensus nodes in the blockchain network, so that the consensus nodes in the blockchain network generate sixth pre-voting information according to the fourth transaction execution result.

The fourth pre-voting unit 1411 is further configured to determine a fourth intermediate pre-voting result according to acquired sixth pre-voting information and fifth pre-voting information.

The fourth voting unit 1412 is configured to perform result voting processing on the third to-be-uploaded block according to the second voting hash and the fourth intermediate pre-voting result to obtain a deterministic scheduling consensus result for the third to-be-uploaded block.

For the specific implementations of the fifth transmitting unit 1407, the second result receiving unit 1408, the second block update unit 1409, the sixth transmitting unit 1410, the fourth pre-voting unit 1411, and the fourth voting unit 1412, please refer to the description of operation S204 in an embodiment corresponding to FIG. 4a above, which will not be repeated here.

The data processing apparatus 1 further includes a third consensus module 15.

The third consensus module 15 is configured to perform signature verification processing on a to-be-consented block in the consensus component according to proposal information for the to-be-consented block to obtain a signature verification result when the blockchain node receives the proposal information through the consensus component. The to-be-consented block is generated by a target blockchain node in a blockchain network when determining that the block output condition is satisfied.

The third consensus module 15 is further configured to determine the transaction scheduling type through the core engine component if the consensus component determines that the signature verification result is a signature verification pass result.

The third consensus module 15 is further configured to acquire a second transaction execution sequence from the to-be-consented block if the core engine component determines that the transaction scheduling type is a non-deterministic scheduling type, and execute the to-be-consented block according to the second transaction execution sequence to obtain a fifth transaction execution result.

The third consensus module 15 is further configured to transmit the fifth transaction execution result in the core engine component to the consensus component, and perform verification voting processing on the to-be-consented block in the consensus component according to the fifth transaction execution result to obtain a consensus result for the to-be-consented block.

The third consensus module 15 is further configured to execute the to-be-consented block according to a deterministic transaction execution sequence to obtain a sixth transaction execution result if the core engine component determines that the transaction scheduling type is a deterministic scheduling type.

The third consensus module 15 is further configured to transmit the sixth transaction execution result in the core engine component to the consensus component, and perform verification voting processing on the to-be-consented block in the consensus component according to the sixth transaction execution result to obtain a consensus result for the to-be-consented block.

For the specific implementations of the third consensus module 15, please refer to the description of operation S301 to operation S306 in an embodiment corresponding to FIG. 5a above, which will not be repeated here.

The consensus component includes a consensus adaptation component and a consensus execution component.

The data processing apparatus 1 further includes a fourth consensus module 16.

The fourth consensus module 16 is configured to perform signature verification processing on a to-be-consented block in the consensus execution component according to proposal information for the to-be-consented block to obtain a signature verification result when the blockchain node receives the proposal information through the consensus execution component. The to-be-consented block is generated by a target blockchain node in a blockchain network when the block output condition is satisfied.

The fourth consensus module 16 is further configured to transmit an execution request to the consensus adaptation component through the consensus execution component if the consensus execution component determines that the signature verification result is a signature verification pass result, and transmit the execution request to the core engine component through the consensus adaptation component.

The fourth consensus module 16 is further configured to determine the transaction scheduling type in the core engine component according to the execution request.

The fourth consensus module 16 is further configured to acquire a second transaction execution sequence from the to-be-consented block if the core engine component determines that the transaction scheduling type is a non-deterministic scheduling type, and execute the to-be-consented block according to the second transaction execution sequence to obtain a seventh transaction execution result.

The fourth consensus module 16 is further configured to transmit the seventh transaction execution result in the core engine component to the consensus adaptation component, and generate a third voting hash in the consensus adaptation component according to the seventh transaction execution result.

The fourth consensus module 16 is further configured to transmit the seventh transaction execution result and the third voting hash to the consensus execution component through the consensus adaptation component, and perform verification voting processing on the to-be-consented block in the consensus execution component according to the seventh transaction execution result and the third voting hash to obtain a consensus result for the to-be-consented block.

The fourth consensus module 16 is further configured to execute the to-be-consented block according to a deterministic transaction execution sequence to obtain an eighth transaction execution result if the core engine component determines that the transaction scheduling type is a deterministic scheduling type.

The fourth consensus module 16 is further configured to transmit the eighth transaction execution result from the core engine component to the consensus adaptation component, and generate a fourth voting hash in the consensus adaptation component according to the eighth transaction execution result.

The fourth consensus module 16 is further configured to transmit the eighth transaction execution result and the fourth voting hash to the consensus execution component through the consensus adaptation component, and perform verification voting processing on the to-be-consented block in the consensus execution component according to the eighth transaction execution result and the fourth voting hash to obtain a consensus result for the to-be-consented block.

For the specific implementations of the fourth consensus module 16, please refer to the description of operation S401 to operation S406 in an embodiment corresponding to FIG. 6a above, which will not be repeated here.

The data processing apparatus 1 further includes a configuration update module 17.

The configuration update module 17 is configured to acquire a configuration information update transaction. The configuration information update transaction includes updating a transaction scheduling identifier.

The configuration update module 17 is further configured to call a configuration information update contract according to the configuration information update transaction if it is determined that the configuration information update transaction passes in consensus, and update the transaction scheduling identifier through the configuration information update contract.

For the specific implementation of the configuration update module 17, please refer to the exemplary description of operation S104 in an embodiment corresponding to FIG. 3a above, which will not be repeated here.

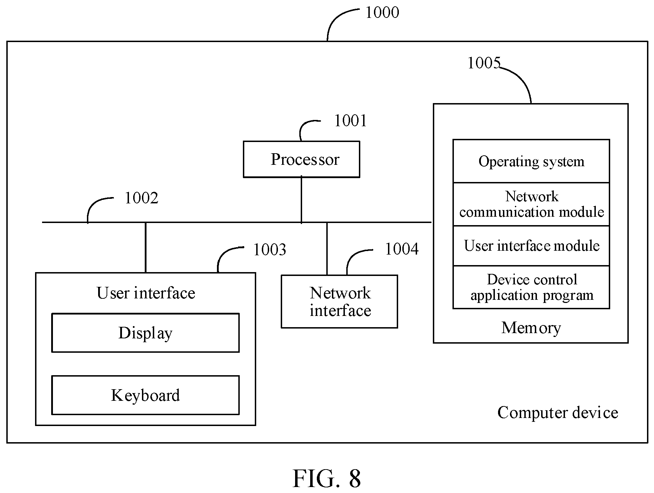

Please refer to FIG. 8. FIG. 8 is a schematic structural diagram of a computer device according to an embodiment of the present disclosure. Referring to FIG. 8, the data processing apparatus 1 in an embodiment corresponding to FIG. 7 may be applied to the computer device 1000. The computer device 1000 may include a processor 1001, a network interface 1004, and a memory 1005. In addition, the computer device 1000 may further include a user interface 1003 and at least one communication bus 1002. The communications bus 1002 is configured to implement connection and communication between the components. The user interface 1003 may include a display and a keyboard. In some embodiments, the user interface 1003 may further include a standard wired interface and wireless interface. In some embodiments, the network interface 1004 may include a standard wired interface and wireless interface (such as WI-FI interface). The memory 1005 may be a high-speed random access memory (RAM) memory, or a non-volatile memory, for example, at least one magnetic disk memory. In some embodiments, the memory 1005 may be at least one storage apparatus located remotely from the foregoing processor 1001. Referring to FIG. 8, the memory 1005 used as a computer storage medium may include an operating system, a network communication module, a user interface module, and a device control application program.

In the computer device 1000 shown in FIG. 8, the network interface 1004 can provide a network communication element. The user interface 1003 is mainly configured to provide an input interface for the user. The processor 1001 may be configured to call the device control application program stored in the memory 1005 to implement the following processing:
when it is determined through a core engine component that a block output condition is satisfied, acquiring chain configuration information through the core engine component, creating a preparatory block according to the chain configuration information, and determining a transaction scheduling type according to the chain configuration information, the block output condition referring to a condition that the blockchain node is selected as a proposal node for a current round of blocks;
performing execution processing on the preparatory block through the core engine component to obtain a first to-be-uploaded block if the core engine component determines that the transaction scheduling type is a non-deterministic scheduling type, the first to-be-uploaded block containing a first transaction execution sequence and a first transaction execution result;
transmitting the first to-be-uploaded block in the core engine component to a consensus component, and performing non-deterministic scheduling consensus processing on the first to-be-uploaded block through the consensus component; and
if the core engine component determines that the transaction scheduling type is a deterministic scheduling type, transmitting the preparatory block in the core engine component to the consensus component, and performing deterministic scheduling consensus processing on the preparatory block through the consensus component and the core engine component, the core engine component being configured to execute transactions in the preparatory block during the deterministic scheduling consensus processing.

The computer device 1000 described in this embodiment of the present disclosure can execute the description of the data processing method in an embodiment corresponding to any one of FIG. 3a, FIG. 4a, FIG. 5a, and FIG. 6a above, which will not be repeated here. In addition, the description of beneficial effects of the same method are not described herein again.

In addition, an embodiment of the present disclosure further provides a computer-readable storage medium having the computer program executed by the data processing apparatus 1 above stored therein. The computer program includes program instructions. When the processor executes the program instructions, it can execute the description of the data processing method in an embodiment corresponding to any one of FIG. 3a, FIG. 4a, FIG. 5a, and FIG. 6a above, which will not be repeated here. In addition, the description of beneficial effects of the same method are not described herein again. For technical details that are not disclosed in the computer storage medium embodiment of the present disclosure, please refer to the description of the method embodiments of the present disclosure.

The computer-readable storage medium may be the data processing apparatus according to any one of embodiments or an internal storage unit of the computer device, such as a hard disk or an internal memory of the computer device. The computer-readable storage medium may also be an external storage device of the computer device, such as a plug-in hard disk, a smart media card (SMC), a secure digital (SD) card or a flash card equipped on the computer device. Further, the computer-readable storage medium may also include both the internal storage unit and the external storage device of the computer device. The computer-readable storage medium is used for storing the computer program and other programs and data configured by the computer device. The computer-readable storage medium may also be used for temporarily storing data that have been output or will be output.

In addition, an embodiment of the present disclosure further provides a computer program product or a computer program. The computer program product or the computer program includes computer instructions. The computer instructions are stored in a computer-readable storage medium. The processor of the computer device reads the computer instructions from the computer-readable storage medium and the processor executes the computer instructions to cause the computer device to execute the method provided in an embodiment corresponding to any one of FIG. 3a, FIG. 4a, FIG. 5a, and FIG. 6a above.

Terms such as "first" and "second" in the description, claims and accompanying drawings of the present disclosure are used for distinguishing different objects, instead of describing a specific order. In addition, the terms "include" and any variant thereof are intended to cover a non-exclusive inclusion. For example, a process, method, apparatus, product, or device that includes a series of steps or units is not limited to the listed steps or units; and instead, includes a step or unit that is not listed in some embodiments, or further includes another step or unit that is intrinsic to the process, method, apparatus, product, or device in some embodiments.

A person skilled in the art may understand that, units and algorithm steps of the examples described in the foregoing disclosed embodiments may be implemented by electronic hardware, computer software, or a combination thereof. To clearly describe the interchangeability between the hardware and the software, the foregoing has generally described compositions and steps of each example according to network elements. Whether the network elements are executed by hardware or software depends on particular applications and design constraint conditions of the technical solutions. A person skilled in the art may use different methods to implement the described network elements of each particular application, but it does not be considered that the implementation goes beyond the scope of the present disclosure, subject to the understanding that the scope of protection is defined by the appending claims.

## Claims

1. A blockchain-based data processing method, **characterized in that** the method is performed by a blockchain node comprising a core engine component and a consensus component, and the method comprises:
(S101) when the blockchain node determines through the core engine component that a block output condition is satisfied, acquiring chain configuration information for creating a preparatory block and determining a transaction scheduling type through the core engine component, creating the preparatory block using the chain configuration information, and determining the transaction scheduling type using the chain configuration information, wherein the block output condition indicates that the blockchain node is selected as a proposal node for a current round of blocks;
executing (S102) the preparatory block through the core engine component to obtain a first to-be-uploaded block when the core engine component determines that the transaction scheduling type is a non-deterministic scheduling type, wherein the first to-be-uploaded block comprises a first transaction execution sequence and a first transaction execution result;
(S103) transmitting the first to-be-uploaded block in the core engine component to a consensus component, and performing non-deterministic scheduling consensus processing on the first to-be-uploaded block through the consensus component; and
(S104) when the core engine component determines that the transaction scheduling type is a deterministic scheduling type, transmitting the preparatory block in the core engine component to the consensus component, and performing deterministic scheduling consensus processing on the preparatory block through the consensus component and the core engine component, wherein the core engine component is configured to execute transactions in the preparatory block during the deterministic scheduling consensus processing.

2. The method of claim 1, wherein the chain configuration information comprises block configuration information and a transaction scheduling identifier; and
wherein acquiring (S101) the chain configuration information through the core engine component, creating the preparatory block using the chain configuration information, and determining the transaction scheduling type using the chain configuration information comprise:
acquiring the block configuration information and the transaction scheduling identifier through the core engine component;
acquiring to-be-packed transactions from a transaction pool using the block configuration information, and performing block packing processing on the to-be-packed transactions using the block configuration information to obtain a preparatory block;
determining that the transaction scheduling type is a non-deterministic scheduling type if the transaction scheduling identifier is a non-deterministic scheduling identifier; and
determining that the transaction scheduling type is a deterministic scheduling type if the transaction scheduling identifier is a deterministic scheduling identifier.

3. The method of claim **1,** wherein transmitting the first to-be-uploaded block in the core engine component to the consensus component, and performing the non-deterministic scheduling consensus processing on the first to-be-uploaded block through the consensus component comprise:
transmitting the first to-be-uploaded block in the core engine component to the consensus component;
determining the transaction scheduling type through the consensus component;
when the consensus component determines that the transaction scheduling type is the non-deterministic scheduling type, performing pre-voting processing on the first to-be-uploaded block in the consensus component using the first transaction execution sequence and the first transaction execution result in the first to-be-uploaded block to obtain a first intermediate pre-voting result; and
performing result voting processing on the first to-be-uploaded block using the first intermediate pre-voting result and a first block hash corresponding to the first to-be-uploaded block to obtain a non-deterministic scheduling consensus result for the first to-be-uploaded block.

4. The method of claim 3, wherein performing the pre-voting processing on the first to-be-uploaded block in the consensus component using the first transaction execution sequence and the first transaction execution result to obtain the first intermediate pre-voting result comprises:
generating proposal information for the first to-be-uploaded block in the consensus component, and broadcasting the proposal information to consensus nodes in a blockchain network, so that the consensus nodes in the blockchain network generate a second transaction execution result using the proposal information, and generate first pre-voting information using the first transaction execution result and the second transaction execution result, the second transaction execution result being obtained after the consensus nodes in the blockchain network execute transactions in the first to-be-uploaded block using the first transaction execution sequence;
generating second pre-voting information for the first transaction execution result, and broadcasting the second pre-voting information to the consensus nodes in the blockchain network; and
determining the first intermediate pre-voting result using the first pre-voting information and the second pre-voting information.

5. The method of claim 3, wherein performing the result voting processing on the first to-be-uploaded block using the first intermediate pre-voting result and the first block hash corresponding to the first to-be-uploaded block to obtain the non-deterministic scheduling consensus result for the first to-be-uploaded block comprises:
generating first voting information for the first to-be-uploaded block using the first intermediate pre-voting result and the first block hash corresponding to the first to-be-uploaded block, wherein the first voting information comprises the first intermediate pre-voting result and the first block hash;
transmitting the first voting information to consensus nodes in a blockchain network;
receiving second voting information for the first to-be-uploaded block transmitted by the consensus nodes in the blockchain network, the second voting information containing an intermediate pre-voting result determined by the consensus nodes in the blockchain network and the first block hash; and
determining the non-deterministic scheduling consensus result for the first to-be-uploaded block using the first voting information and the second voting information.

6. The method of claim 1, wherein transmitting the preparatory block in the core engine component to the consensus component, and performing the deterministic scheduling consensus processing on the preparatory block through the consensus component and the core engine component comprise:
transmitting the preparatory block in the core engine component to the consensus component;
determining a transaction scheduling type through the consensus component;
generating proposal information for the preparatory block in the consensus component when the consensus component determines that the transaction scheduling type is a deterministic scheduling type, and broadcasting the proposal information to consensus nodes in a blockchain network, so that the consensus nodes in the blockchain network execute the transactions in the preparatory block in the proposal information using a deterministic transaction execution sequence;
generating fourth pre-voting information for a third transaction execution result when the third transaction execution result transmitted by the core engine component is received through the consensus component, and broadcasting the fourth pre-voting information and the third transaction execution result to the consensus nodes in the blockchain network, so that the consensus nodes in the blockchain network generate third pre-voting information using the third transaction execution result, the third transaction execution result being obtained after the core engine component starts to execute the transactions in the preparatory block according to the deterministic transaction execution sequence when the preparatory block is acquired;
determining a second intermediate pre-voting result using acquired third pre-voting information and fourth pre-voting information;
updating the preparatory block using the third transaction execution result to obtain a second to-be-uploaded block; and
performing result voting processing on the second to-be-uploaded block using the second intermediate pre-voting result and a second block hash corresponding to the second to-be-uploaded block to obtain a deterministic scheduling consensus result for the second to-be-uploaded block.

7. The method of claim **1,** wherein the consensus component comprises a consensus adaptation component and a consensus execution component; and
wherein transmitting (S103) the first to-be-uploaded block in the core engine component to the consensus component, and performing the non-deterministic scheduling consensus processing on the first to-be-uploaded block through the consensus component comprise:
transmitting (S203) the first to-be-uploaded block in the core engine component to the consensus adaptation component, and generating a first voting hash for the first to-be-uploaded block in the consensus adaptation component using a first block hash corresponding to the first to-be-uploaded block;
transmitting the first to-be-uploaded block and the first voting hash in the consensus adaptation component to the consensus execution component;
performing pre-voting processing on the first to-be-uploaded block in the consensus execution component using the first transaction execution sequence and the first transaction execution result in the first to-be-uploaded block to obtain a third intermediate pre-voting result; and
performing result voting processing on the first to-be-uploaded block using the first voting hash and the third intermediate pre-voting result to obtain a non-deterministic scheduling consensus result for the first to-be-uploaded block.

8. The method of claim **1,** wherein the consensus component comprises a consensus adaptation component and a consensus execution component; and
wherein transmitting (S104) the preparatory block in the core engine component to the consensus component, and performing the deterministic scheduling consensus processing on the preparatory block through the consensus component and the core engine component comprise:
transmitting (S204) the preparatory block in the core engine component to the consensus adaptation component, transmitting the preparatory block to the consensus execution component through the consensus adaptation component, generating proposal information for the preparatory block in the consensus execution component, and broadcasting the proposal information to consensus nodes in a blockchain network, so that the consensus nodes in the blockchain network execute the transactions in the preparatory block in the proposal information according to a deterministic transaction execution sequence;
receiving a fourth transaction execution result transmitted by the core engine component through the consensus adaptation component, the fourth transaction execution result being obtained after the core engine component executes the transactions in the preparatory block according to the deterministic transaction execution sequence;
updating the preparatory block in the consensus adaptation component using the fourth transaction execution result to obtain a third to-be-uploaded block, and generating a second voting hash for the third to-be-uploaded block using a third block hash corresponding to the third to-be-uploaded block;
transmitting the fourth transaction execution result and the second voting hash in the consensus adaptation component to the consensus execution component;
generating fifth pre-voting information for the fourth transaction execution result in the consensus execution component, and broadcasting the fifth pre-voting information and the fourth transaction execution result to the consensus nodes in the blockchain network, so that the consensus nodes in the blockchain network generate sixth pre-voting information using the fourth transaction execution result;
determining a fourth intermediate pre-voting result using acquired sixth pre-voting information and fifth pre-voting information; and
performing result voting processing on the third to-be-uploaded block using the second voting hash and the fourth intermediate pre-voting result to obtain a deterministic scheduling consensus result for the third to-be-uploaded block.

9. The method of claim **1,** further comprising:
performing (S301) signature verification processing on a to-be-consented block in the consensus component using proposal information for the to-be-consented block to obtain a signature verification result when the blockchain node receives the proposal information through the consensus component, the to-be-consented block being generated by a target blockchain node in a blockchain network when determining that the block output condition is satisfied;
determining (S302) the transaction scheduling type through the core engine component when the consensus component determines that the signature verification result is a signature verification pass result;
acquiring (S303) a second transaction execution sequence from the to-be-consented block when the core engine component determines that the transaction scheduling type is the non-deterministic scheduling type, and executing the to-be-consented block according to the second transaction execution sequence to obtain a fifth transaction execution result;
transmitting (S304) the fifth transaction execution result in the core engine component to the consensus component, and performing verification voting processing on the to-be-consented block in the consensus component using the fifth transaction execution result to obtain a consensus result for the to-be-consented block;
executing (S305) the to-be-consented block according to a deterministic transaction execution sequence to obtain a sixth transaction execution result when the core engine component determines that the transaction scheduling type is the deterministic scheduling type; and
transmitting (S306) the sixth transaction execution result in the core engine component to the consensus component, and performing verification voting processing on the to-be-consented block in the consensus component using the sixth transaction execution result to obtain a consensus result for the to-be-consented block.

10. The method of claim 1, wherein the consensus component comprises a consensus adaptation component and a consensus execution component; and
wherein the method further comprises:
performing (S401) signature verification processing on a to-be-consented block in the consensus execution component using proposal information for the to-be-consented block to obtain a signature verification result when the blockchain node receives the proposal information through the consensus execution component, the to-be-consented block being generated by a target blockchain node in a blockchain network when the block output condition is satisfied;
transmitting (S402) an execution request to the consensus adaptation component through the consensus execution component when the consensus execution component determines that the signature verification result is a signature verification pass result, and transmitting the execution request to the core engine component through the consensus adaptation component;
determining (S402) the transaction scheduling type in the core engine component according to the execution request;
acquiring (S403) a second transaction execution sequence from the to-be-consented block when the core engine component determines that the transaction scheduling type is the non-deterministic scheduling type, and executing the to-be-consented block according to the second transaction execution sequence to obtain a seventh transaction execution result;
transmitting (S403) the seventh transaction execution result in the core engine component to the consensus adaptation component, and generating a third voting hash in the consensus adaptation component according to the seventh transaction execution result;
transmitting (S404) the seventh transaction execution result and the third voting hash to the consensus execution component through the consensus adaptation component, and performing verification voting processing on the to-be-consented block in the consensus execution component according to the seventh transaction execution result and the third voting hash to obtain a consensus result for the to-be-consented block;
executing (S405) the to-be-consented block according to a deterministic transaction execution sequence to obtain an eighth transaction execution result when the core engine component determines that the transaction scheduling type is the deterministic scheduling type;
transmitting (S405) the eighth transaction execution result from the core engine component to the consensus adaptation component, and generating a fourth voting hash in the consensus adaptation component according to the eighth transaction execution result; and
transmitting (S406) the eighth transaction execution result and the fourth voting hash to the consensus execution component through the consensus adaptation component, and performing verification voting processing on the to-be-consented block in the consensus execution component according to the eighth transaction execution result and the fourth voting hash to obtain a consensus result for the to-be-consented block.

11. The method of claim 2, further comprising:
acquiring a configuration information update transaction, wherein the configuration information update transaction comprises updating a transaction scheduling identifier; and
calling a configuration information update contract according to the configuration information update transaction when it is determined that the configuration information update transaction passes in consensus, and updating the transaction scheduling identifier through the configuration information update contract.

12. A blockchain-based data processing apparatus (1), **characterized in that** the apparatus is located in a blockchain node comprises a core engine component and a consensus component, and the apparatus comprises:
a packing module (11), configured to: when it is determined through the core engine component that a block output condition is satisfied, acquire chain configuration information through the core engine component, create a preparatory block using the chain configuration information, and determine a transaction scheduling type using the chain configuration information, wherein the block output condition refers to a condition that the blockchain node is selected as a proposal node for a current round of blocks;
a first execution module (12), configured to execute the preparatory block through the core engine component to obtain a first to-be-uploaded block when the core engine component determines that the transaction scheduling type is a non-deterministic scheduling type, wherein the first to-be-uploaded block comprises a first transaction execution sequence and a first transaction execution result;
a first consensus module (13), configured to transmit the first to-be-uploaded block in the core engine component to the consensus component, and perform non-deterministic scheduling consensus processing on the first to-be-uploaded block through the consensus component; and
a second consensus module (14), configured to, when the core engine component determines that the transaction scheduling type is a deterministic scheduling type, transmit the preparatory block in the core engine component to the consensus component, and perform deterministic scheduling consensus processing on the preparatory block through the consensus component and the core engine component, wherein the core engine component is configured to execute transactions in the preparatory block during the deterministic scheduling consensus processing.

13. A computer device (1000), comprising: a processor (1001), a memory (1005), and a network interface (1004), wherein
the processor (1001) is connected with the memory (1005) and the network interface (1004), the network interface (1004) is configured to provide a data communication function, the memory (1005) is configured to store a program code, and the processor (1001) is configured to call the program code to perform the method of any one of claims 1 to 11.

14. A computer-readable storage medium having stored therein a computer program that, when loaded and executed by a processor, causes the processor to perform the method of any one of claims 1 to 11.

15. A computer program product comprising a computer program/instruction, the computer program/instruction, when executed by a processor, implementing the method of any one of claims 1 to 11.

## Patentansprüche

1. Blockchain-basiertes Datenverarbeitungsverfahren, **dadurch gekennzeichnet, dass** das Verfahren durch einen Blockchain-Knoten durchgeführt wird, der eine Kern-Engine-Komponente und eine Konsenskomponente umfasst, und das Verfahren umfasst:
(S101) wenn der Blockchain-Knoten durch die Kern-Engine-Komponente bestimmt, dass eine Blockausgabebedingung erfüllt ist, Erlangen von Kettenkonfigurationsinformationen zum Erzeugen eines Vorbereitungsblocks und Bestimmen eines Transaktionsplanungstyps durch die Kern-Engine-Komponente, Erzeugen des Vorbereitungsblocks unter Verwendung der Kettenkonfigurationsinformationen und Bestimmen des Transaktionsplanungstyps unter Verwendung der Kettenkonfigurationsinformationen, wobei die Blockausgabebedingung angibt, dass der Blockchain-Knoten als ein Vorschlagsknoten für eine aktuelle Runde von Blöcken ausgewählt ist;
Ausführen (S102) des Vorbereitungsblocks durch die Kern-Engine-Komponente, um einen ersten hochzuladenden Block zu erhalten, wenn die Kern-Engine-Komponente bestimmt, dass der Transaktionsplanungstyp ein nichtdeterministischer Planungstyp ist, wobei der erste hochzuladende Block eine erste Transaktionsausführungssequenz und ein erstes Transaktionsausführungsergebnis umfasst;
(S103) Senden des ersten hochzuladenden Blocks in der Kern-Engine-Komponente an eine Konsenskomponente und Durchführen von nichtdeterministischer Planungskonsensverarbeitung an dem ersten hochzuladenden Block durch die Konsenskomponente; und
(S104) wenn die Kern-Engine-Komponente bestimmt, dass der Transaktionsplanungstyp ein deterministischer Planungstyp ist, Senden des Vorbereitungsblocks in der Kern-Engine-Komponente an die Konsenskomponente und Durchführen von deterministischer Planungskonsensverarbeitung an dem Vorbereitungsblock durch die Konsenskomponente und die Kern-Engine-Komponente, wobei die Kern-Engine-Komponente dazu konfiguriert ist, Transaktionen in dem Vorbereitungsblock während der deterministischen Planungskonsensverarbeitung auszuführen.

2. Verfahren nach Anspruch 1, wobei die Kettenkonfigurationsinformationen Blockkonfigurationsinformationen und eine Transaktionsplanungskennung umfassen; und
wobei Erlangen (S101) der Kettenkonfigurationsinformationen durch die Kern-Engine-Komponente, Erzeugen des Vorbereitungsblocks unter Verwendung der Kettenkonfigurationsinformationen und Bestimmen des Transaktionsplanungstyps unter Verwendung der Kettenkonfigurationsinformationen umfassen:
Erlangen der Blockkonfigurationsinformationen und der Transaktionsplanungskennung durch die Kern-Engine-Komponente;
Erlangen von zu verpackenden Transaktionen aus einem Transaktionspool unter Verwendung der Blockkonfigurationsinformationen und Durchführen von Blockverpackungsverarbeitung an den zu verpackenden Transaktionen unter Verwendung der Blockkonfigurationsinformationen, um einen Vorbereitungsblock zu erhalten;
Bestimmen, dass der Transaktionsplanungstyp ein nichtdeterministischer Planungstyp ist, falls die Transaktionsplanungskennung eine nichtdeterministische Planungskennung ist; und
Bestimmen, dass der Transaktionsplanungstyp ein deterministischer Planungstyp ist, falls die Transaktionsplanungskennung eine deterministische Planungskennung ist.

3. Verfahren nach Anspruch 1, wobei Senden des ersten hochzuladenden Blocks in der Kern-Engine-Komponente an die Konsenskomponente und Durchführen der nichtdeterministischen Planungskonsensverarbeitung an dem ersten hochzuladenden Block durch die Konsenskomponente umfassen:
Senden des ersten hochzuladenden Blocks in der Kern-Engine-Komponente an die Konsenskomponente;
Bestimmen des Transaktionsplanungstyps durch die Konsenskomponente;
wenn die Konsenskomponente bestimmt, dass der Transaktionsplanungstyp der nichtdeterministische Planungstyp ist, Durchführen von Vorab-Abstimmungsverarbeitung an dem ersten hochzuladenden Block in der Konsenskomponente unter Verwendung der ersten Transaktionsausführungssequenz und des ersten Transaktionsausführungsergebnisses in dem ersten hochzuladenden Block, um ein erstes Zwischen-Vorab-Abstimmungsergebnis zu erhalten; und
Durchführen von Ergebnisabstimmungsverarbeitung an dem ersten hochzuladenden Block unter Verwendung des ersten Zwischen-Vorab-Abstimmungsergebnisses und eines ersten Block-Hashs, der dem ersten hochzuladenden Block entspricht, um ein nichtdeterministisches Planungskonsensergebnis für den ersten hochzuladenden Block zu erhalten.

4. Verfahren nach Anspruch 3, wobei Durchführen der Vorab-Abstimmungsverarbeitung an dem ersten hochzuladenden Block in der Konsenskomponente unter Verwendung der ersten Transaktionsausführungssequenz und des ersten Transaktionsausführungsergebnisses, um das erste Zwischen-Vorab-Abstimmungsergebnis zu erhalten, umfasst:
Erzeugen von Vorschlagsinformationen für den ersten hochzuladenden Block in der Konsenskomponente und Rundsenden der Vorschlagsinformationen an Konsensknoten in einem Blockchain-Netzwerk, so dass die Konsensknoten in dem Blockchain-Netzwerk ein zweites Transaktionsausführungsergebnis unter Verwendung der Vorschlagsinformationen erzeugen und erste Vorab-Abstimmungsinformationen unter Verwendung des ersten Transaktionsausführungsergebnisses und des zweiten Transaktionsausführungsergebnisses erzeugen, wobei das zweite Transaktionsausführungsergebnis erhalten wird, nachdem die Konsensknoten in dem Blockchain-Netzwerk Transaktionen in dem ersten hochzuladenden Block unter Verwendung der ersten Transaktionsausführungssequenz ausführen;
Erzeugen von zweiten Vorab-Abstimmungsinformationen für das erste Transaktionsausführungsergebnis und Rundsenden der zweiten Vorab-Abstimmungsinformationen an die Konsensknoten in dem Blockchain-Netzwerk; und
Bestimmen des ersten Zwischen-Vorab-Abstimmungsergebnisses unter Verwendung der ersten Vorab-Abstimmungsinformationen und der zweiten Vorab-Abstimmungsinformationen.

5. Verfahren nach Anspruch 3, wobei Durchführen der Ergebnisabstimmungsverarbeitung an dem ersten hochzuladenden Block unter Verwendung des ersten Zwischen-Vorab-Abstimmungsergebnisses und des ersten Block-Hashs, der dem ersten hochzuladenden Block entspricht, um das nichtdeterministische Planungskonsensergebnis für den ersten hochzuladenden Block zu erhalten, umfasst:
Erzeugen von ersten Abstimmungsinformationen für den ersten hochzuladenden Block unter Verwendung des ersten Zwischen-Vorab-Abstimmungsergebnisses und des ersten Block-Hashs, der dem ersten hochzuladenden Block entspricht, wobei die ersten Abstimmungsinformationen das erste Zwischen-Vorab-Abstimmungsergebnis und den ersten Block-Hash umfassen;
Senden der ersten Abstimmungsinformationen an Konsensknoten in einem Blockchain-Netzwerk;
Empfangen von zweiten Abstimmungsinformationen für den ersten hochzuladenden Block, die durch die Konsensknoten in dem Blockchain-Netzwerk gesendet werden, wobei die zweiten Abstimmungsinformationen ein Zwischen-Vorab-Abstimmungsergebnis, das durch die Konsensknoten in dem Blockchain-Netzwerk bestimmt wird, und den ersten Block-Hash enthalten; und
Bestimmen des nichtdeterministischen Planungskonsensergebnisses für den ersten hochzuladenden Block unter Verwendung der ersten Abstimmungsinformationen und der zweiten Abstimmungsinformationen.

6. Verfahren nach Anspruch 1, wobei Senden des Vorbereitungsblocks in der Kern-Engine-Komponente an die Konsenskomponente und Durchführen der deterministischen Planungskonsensverarbeitung an dem Vorbereitungsblock durch die Konsenskomponente und die Kern-Engine-Komponente umfassen:
Senden des Vorbereitungsblocks in der Kern-Engine-Komponente an die Konsenskomponente;
Bestimmen eines Transaktionsplanungstyps durch die Konsenskomponente;
Erzeugen von Vorschlagsinformationen für den Vorbereitungsblock in der Konsenskomponente, wenn die Konsenskomponente bestimmt, dass der Transaktionsplanungstyp ein deterministischer Planungstyp ist, und Rundsenden der Vorschlagsinformationen an Konsensknoten in einem Blockchain-Netzwerk, so dass die Konsensknoten in dem Blockchain-Netzwerk die Transaktionen in dem Vorbereitungsblock in den Vorschlagsinformationen unter Verwendung einer deterministischen Transaktionsausführungssequenz ausführen;
Erzeugen von vierten Vorab-Abstimmungsinformationen für ein drittes Transaktionsausführungsergebnis, wenn das durch die Kern-Engine-Komponente gesendete dritte Transaktionsausführungsergebnis durch die Konsenskomponente empfangen wird, und Rundsenden der vierten Vorab-Abstimmungsinformationen und des dritten Transaktionsausführungsergebnisses an die Konsensknoten in dem Blockchain-Netzwerk, so dass die Konsensknoten in dem Blockchain-Netzwerk dritte Vorab-Abstimmungsinformationen unter Verwendung des dritten Transaktionsausführungsergebnisses erzeugen, wobei das dritte Transaktionsausführungsergebnis erhalten wird, nachdem die Kern-Engine-Komponente beginnt, die Transaktionen in dem Vorbereitungsblock gemäß der deterministischen Transaktionsausführungssequenz auszuführen, wenn der Vorbereitungsblock erlangt wird;
Bestimmen eines zweiten Zwischen-Vorab-Abstimmungsergebnisses unter Verwendung von erlangten dritten Vorab-Abstimmungsinformationen und vierten Vorab-Abstimmungsinformationen;
Aktualisieren des Vorbereitungsblocks unter Verwendung des dritten Transaktionsausführungsergebnisses, um einen zweiten hochzuladenden Block zu erhalten; und
Durchführen von Ergebnisabstimmungsverarbeitung an dem zweiten hochzuladenden Block unter Verwendung des zweiten Zwischen-Vorab-Abstimmungsergebnisses und eines zweiten Block-Hashs, der dem zweiten hochzuladenden Block entspricht, um ein deterministisches Planungskonsensergebnis für den zweiten hochzuladenden Block zu erhalten.

7. Verfahren nach Anspruch 1, wobei die Konsenskomponente eine Konsensanpassungskomponente und eine Konsensausführungskomponente umfasst; und
wobei Senden (S103) des ersten hochzuladenden Blocks in der Kern-Engine-Komponente an die Konsenskomponente und Durchführen der nichtdeterministischen Planungskonsensverarbeitung an dem ersten hochzuladenden Block durch die Konsenskomponente umfassen:
Senden (S203) des ersten hochzuladenden Blocks in der Kern-Engine-Komponente an die Konsensanpassungskomponente und Erzeugen eines ersten Abstimmungs-Hashs für den ersten hochzuladenden Block in der Konsensanpassungskomponente unter Verwendung eines ersten Block-Hashs, der dem ersten hochzuladenden Block entspricht;
Senden des ersten hochzuladenden Blocks und des ersten Abstimmungs-Hashs in der Konsensanpassungskomponente an die Konsensausführungskomponente;
Durchführen von Vorab-Abstimmungsverarbeitung an dem ersten hochzuladenden Block in der Konsensausführungskomponente unter Verwendung der ersten Transaktionsausführungssequenz und des ersten Transaktionsausführungsergebnisses in dem ersten hochzuladenden Block, um ein drittes Zwischen-Vorab-Abstimmungsergebnis zu erhalten; und
Durchführen von Ergebnisabstimmungsverarbeitung an dem ersten hochzuladenden Block unter Verwendung des ersten Abstimmungs-Hashs und des dritten Zwischen-Vorab-Abstimmungsergebnisses, um ein nichtdeterministisches Planungskonsensergebnis für den ersten hochzuladenden Block zu erhalten.

8. Verfahren nach Anspruch 1, wobei die Konsenskomponente eine Konsensanpassungskomponente und eine Konsensausführungskomponente umfasst; und
wobei Senden (S104) des Vorbereitungsblocks in der Kern-Engine-Komponente an die Konsenskomponente und Durchführen der deterministischen Planungskonsensverarbeitung an dem Vorbereitungsblock durch die Konsenskomponente und die Kern-Engine-Komponente umfassen:
Senden (S204) des Vorbereitungsblocks in der Kern-Engine-Komponente an die Konsensanpassungskomponente, Senden des Vorbereitungsblocks an die Konsensausführungskomponente durch die Konsensanpassungskomponente, Erzeugen von Vorschlagsinformationen für den Vorbereitungsblock in der Konsensausführungskomponente und Rundsenden der Vorschlagsinformationen an Konsensknoten in einem Blockchain-Netzwerk, so dass die Konsensknoten in dem Blockchain-Netzwerk die Transaktionen in dem Vorbereitungsblock in den Vorschlagsinformationen gemäß einer deterministischen Transaktionsausführungssequenz ausführen;
Empfangen eines vierten Transaktionsausführungsergebnisses, das durch die Kern-Engine-Komponente gesendet wird, durch die Konsensanpassungskomponente, wobei das vierte Transaktionsausführungsergebnis erhalten wird, nachdem die Kern-Engine-Komponente die Transaktionen in dem Vorbereitungsblock gemäß der deterministischen Transaktionsausführungssequenz ausführt;
Aktualisieren des Vorbereitungsblocks in der Konsensanpassungskomponente unter Verwendung des vierten Transaktionsausführungsergebnisses, um einen dritten hochzuladenden Block zu erhalten, und Erzeugen eines zweiten Abstimmungs-Hashs für den dritten hochzuladenden Block unter Verwendung eines dritten Block-Hashs, der dem dritten hochzuladenden Block entspricht;
Senden des vierten Transaktionsausführungsergebnisses und des zweiten Abstimmungs-Hashs in der Konsensanpassungskomponente an die Konsensausführungskomponente;
Erzeugen von fünften Vorab-Abstimmungsinformationen für das vierte Transaktionsausführungsergebnis in der Konsensausführungskomponente und Rundsenden der fünften Vorab-Abstimmungsinformationen und des vierten Transaktionsausführungsergebnisses an die Konsensknoten in dem Blockchain-Netzwerk, so dass die Konsensknoten in dem Blockchain-Netzwerk sechste Vorab-Abstimmungsinformationen unter Verwendung des vierten Transaktionsausführungsergebnisses erzeugen;
Bestimmen eines vierten Zwischen-Vorab-Abstimmungsergebnisses unter Verwendung von erlangten sechsten Vorab-Abstimmungsinformationen und fünften Vorab-Abstimmungsinformationen; und
Durchführen von Ergebnisabstimmungsverarbeitung an dem dritten hochzuladenden Block unter Verwendung des zweiten Abstimmungs-Hashs und des vierten Zwischen-Vorab-Abstimmungsergebnisses, um ein deterministisches Planungskonsensergebnis für den dritten hochzuladenden Block zu erhalten.

9. Verfahren nach Anspruch 1, ferner umfassend:
Durchführen (S301) von Signaturverifizierungsverarbeitung an einem zu konsentierenden Block in der Konsenskomponente unter Verwendung von Vorschlagsinformationen für den zu konsentierenden Block, um ein Signaturverifizierungsergebnis zu erhalten, wenn der Blockchain-Knoten die Vorschlagsinformationen durch die Konsenskomponente empfängt, wobei der zu konsentierende Block durch einen Ziel-Blockchain-Knoten in einem Blockchain-Netzwerk erzeugt wird, wenn bestimmt wird, dass die Blockausgabebedingung erfüllt ist;
Bestimmen (S302) des Transaktionsplanungstyps durch die Kern-Engine-Komponente, wenn die Konsenskomponente bestimmt, dass das Signaturverifizierungsergebnis ein Signaturverifizierung-Bestanden-Ergebnis ist;
Erlangen (S303) einer zweiten Transaktionsausführungssequenz aus dem zu konsentierenden Block, wenn die Kern-Engine-Komponente bestimmt, dass der Transaktionsplanungstyp der nichtdeterministische Planungstyp ist, und Ausführen des zu konsentierenden Blocks gemäß der zweiten Transaktionsausführungssequenz, um ein fünftes Transaktionsausführungsergebnis zu erhalten;
Senden (S304) des fünften Transaktionsausführungsergebnisses in der Kern-Engine-Komponente an die Konsenskomponente und Durchführen von Verifizierungsabstimmungsverarbeitung an dem zu konsentierenden Block in der Konsenskomponente unter Verwendung des fünften Transaktionsausführungsergebnisses, um ein Konsensergebnis für den zu konsentierenden Block zu erhalten;
Ausführen (S305) des zu konsentierenden Blocks gemäß einer deterministischen Transaktionsausführungssequenz, um ein sechstes Transaktionsausführungsergebnis zu erhalten, wenn die Kern-Engine-Komponente bestimmt, dass der Transaktionsplanungstyp der deterministische Planungstyp ist; und
Senden (S306) des sechsten Transaktionsausführungsergebnisses in der Kern-Engine-Komponente an die Konsenskomponente und Durchführen von Verifizierungsabstimmungsverarbeitung an dem zu konsentierenden Block in der Konsenskomponente unter Verwendung des sechsten Transaktionsausführungsergebnisses, um ein Konsensergebnis für den zu konsentierenden Block zu erhalten.

10. Verfahren nach Anspruch 1, wobei die Konsenskomponente eine Konsensanpassungskomponente und eine Konsensausführungskomponente umfasst; und
wobei das Verfahren ferner umfasst:
Durchführen (S401) von Signaturverifizierungsverarbeitung an einem zu konsentierenden Block in der Konsensausführungskomponente unter Verwendung von Vorschlagsinformationen für den zu konsentierenden Block, um ein Signaturverifizierungsergebnis zu erhalten, wenn der Blockchain-Knoten die Vorschlagsinformationen durch die Konsensausführungskomponente empfängt, wobei der zu konsentierende Block durch einen Ziel-Blockchain-Knoten in einem Blockchain-Netzwerk erzeugt wird, wenn die Blockausgabebedingung erfüllt ist;
Senden (S402) einer Ausführungsanforderung an die Konsensanpassungskomponente durch die Konsensausführungskomponente, wenn die Konsensausführungskomponente bestimmt, dass das Signaturverifizierungsergebnis ein Signaturverifizierung-Bestanden-Ergebnis ist, und Senden der Ausführungsanforderung an die Kern-Engine-Komponente durch die Konsensanpassungskomponente;
Bestimmen (S402) des Transaktionsplanungstyps in der Kern-Engine-Komponente gemäß der Ausführungsanforderung;
Erlangen (S403) einer zweiten Transaktionsausführungssequenz aus dem zu konsentierenden Block, wenn die Kern-Engine-Komponente bestimmt, dass der Transaktionsplanungstyp der nichtdeterministische Planungstyp ist, und Ausführen des zu konsentierenden Blocks gemäß der zweiten Transaktionsausführungssequenz, um ein siebtes Transaktionsausführungsergebnis zu erhalten;
Senden (S403) des siebten Transaktionsausführungsergebnisses in der Kern-Engine-Komponente an die Konsensanpassungskomponente und Erzeugen eines dritten Abstimmungs-Hashs in der Konsensanpassungskomponente gemäß dem siebten Transaktionsausführungsergebnis;
Senden (S404) des siebten Transaktionsausführungsergebnisses und des dritten Abstimmungs-Hashs an die Konsensausführungskomponente durch die Konsensanpassungskomponente und Durchführen von Verifizierungsabstimmungsverarbeitung an dem zu konsentierenden Block in der Konsensausführungskomponente gemäß dem siebten Transaktionsausführungsergebnis und dem dritten Abstimmungs-Hash, um ein Konsensergebnis für den zu konsentierenden Block zu erhalten;
Ausführen (S405) des zu konsentierenden Blocks gemäß einer deterministischen Transaktionsausführungssequenz, um ein achtes Transaktionsausführungsergebnis zu erhalten, wenn die Kern-Engine-Komponente bestimmt, dass der Transaktionsplanungstyp der deterministische Planungstyp ist;
Senden (S405) des achten Transaktionsausführungsergebnisses von der Kern-Engine-Komponente an die Konsensanpassungskomponente und Erzeugen eines vierten Abstimmungs-Hashs in der Konsensanpassungskomponente gemäß dem achten Transaktionsausführungsergebnis; und
Senden (S406) des achten Transaktionsausführungsergebnisses und des vierten Abstimmungs-Hashs an die Konsensausführungskomponente durch die Konsensanpassungskomponente und Durchführen von Verifizierungsabstimmungsverarbeitung an dem zu konsentierenden Block in der Konsensausführungskomponente gemäß dem achten Transaktionsausführungsergebnis und dem vierten Abstimmungs-Hash, um ein Konsensergebnis für den zu konsentierenden Block zu erhalten.

11. Verfahren nach Anspruch 2, ferner umfassend:
Erlangen einer Konfigurationsinformationen-Aktualisierungstransaktion, wobei die Konfigurationsinformationen-Aktualisierungstransaktion Aktualisieren einer Transaktionsplanungskennung umfasst; und
Aufrufen eines Konfigurationsinformationen-Aktualisierungsvertrags gemäß der Konfigurationsinformationen-Aktualisierungstransaktion, wenn bestimmt wird, dass die Konfigurationsinformationen-Aktualisierungstransaktion im Konsens besteht, und Aktualisieren der Transaktionsplanungskennung durch den Konfigurationsinformationen-Aktualisierungsvertrag.

12. Blockchain-basierte Datenverarbeitungsvorrichtung (1), **dadurch gekennzeichnet, dass** die Vorrichtung in einem Blockchain-Knoten angeordnet ist, der eine Kern-Engine-Komponente und eine Konsenskomponente umfasst, und die Vorrichtung umfasst:
ein Verpackungsmodul (11), konfiguriert zum: wenn durch die Kern-Engine-Komponente bestimmt wird, dass eine Blockausgabebedingung erfüllt ist, Erlangen von Kettenkonfigurationsinformationen durch die Kern-Engine-Komponente, Erzeugen eines Vorbereitungsblocks unter Verwendung der Kettenkonfigurationsinformationen und Bestimmen eines Transaktionsplanungstyps unter Verwendung der Kettenkonfigurationsinformationen, wobei sich die Blockausgabebedingung auf eine Bedingung bezieht, dass der Blockchain-Knoten als ein Vorschlagsknoten für eine aktuelle Runde von Blöcken ausgewählt ist;
ein erstes Ausführungsmodul (12), konfiguriert zum Ausführen des Vorbereitungsblocks durch die Kern-Engine-Komponente, um einen ersten hochzuladenden Block zu erhalten, wenn die Kern-Engine-Komponente bestimmt, dass der Transaktionsplanungstyp ein nichtdeterministischer Planungstyp ist, wobei der erste hochzuladende Block eine erste Transaktionsausführungssequenz und ein erstes Transaktionsausführungsergebnis umfasst;
ein erstes Konsensmodul (13), konfiguriert zum Senden des ersten hochzuladenden Blocks in der Kern-Engine-Komponente an die Konsenskomponente und Durchführen von nichtdeterministischer Planungskonsensverarbeitung an dem ersten hochzuladenden Block durch die Konsenskomponente; und
ein zweites Konsensmodul (14), konfiguriert zum, wenn die Kern-Engine-Komponente bestimmt, dass der Transaktionsplanungstyp ein deterministischer Planungstyp ist, Senden des Vorbereitungsblocks in der Kern-Engine-Komponente an die Konsenskomponente und Durchführen von deterministischer Planungskonsensverarbeitung an dem Vorbereitungsblock durch die Konsenskomponente und die Kern-Engine-Komponente, wobei die Kern-Engine-Komponente dazu konfiguriert ist, Transaktionen in dem Vorbereitungsblock während der deterministischen Planungskonsensverarbeitung auszuführen.

13. Computergerät (1000), umfassend: einen Prozessor (1001), einen Speicher (1005) und eine Netzwerkschnittstelle (1004), wobei
der Prozessor (1001) mit dem Speicher (1005) und der Netzwerkschnittstelle (1004) verbunden ist, die Netzwerkschnittstelle (1004) dazu konfiguriert ist, eine Datenkommunikationsfunktion bereitzustellen, der Speicher (1005) dazu konfiguriert ist, einen Programmcode zu speichern, und der Prozessor (1001) dazu konfiguriert ist, den Programmcode aufzurufen, um das Verfahren nach einem der Ansprüche 1 bis 11 durchzuführen.

14. Computerlesbares Speichermedium, in dem ein Computerprogramm gespeichert ist, das, wenn es durch einen Prozessor geladen und ausgeführt wird, den Prozessor veranlasst, das Verfahren nach einem der Ansprüche 1 bis 11 durchzuführen.

15. Computerprogrammprodukt, umfassend ein Computerprogramm/eine Anweisung, wobei das Computerprogramm/die Anweisung, wenn es/sie durch einen Prozessor ausgeführt wird, das Verfahren nach einem der Ansprüche 1 bis 11 implementiert.

## Revendications

1. Procédé de traitement de données basé sur une chaîne de blocs, **caractérisé en ce que** le procédé est exécuté par un nœud de chaîne de blocs comprenant un composant de moteur central et un composant de consensus, et le procédé comprend :
(S101) lorsque le nœud de chaîne de blocs détermine, par le composant de moteur central, qu'une condition de sortie de bloc est satisfaite, l'acquisition d'informations de configuration de chaîne pour créer un bloc préparatoire et la détermination d'un type d'ordonnancement de transactions par le composant de moteur central, la création du bloc préparatoire au moyen des informations de configuration de chaîne, et la détermination du type d'ordonnancement de transactions au moyen des informations de configuration de chaîne, dans lequel la condition de sortie de bloc indique que le nœud de chaîne de blocs est sélectionné en tant que nœud de proposition pour un tour actuel de blocs ;
l'exécution (S102) du bloc préparatoire par le composant de moteur central pour obtenir un premier bloc à téléverser lorsque le composant de moteur central détermine que le type d'ordonnancement de transactions est un type d'ordonnancement non déterministe, dans lequel le premier bloc à téléverser comprend une première séquence d'exécution de transactions et un premier résultat d'exécution de transactions ;
(S103) la transmission du premier bloc à téléverser dans le composant de moteur central à un composant de consensus, et l'exécution d'un traitement de consensus d'ordonnancement non déterministe sur le premier bloc à téléverser par le composant de consensus ; et
(S104) lorsque le composant de moteur central détermine que le type d'ordonnancement de transactions est un type d'ordonnancement déterministe, la transmission du bloc préparatoire dans le composant de moteur central au composant de consensus, et l'exécution d'un traitement de consensus d'ordonnancement déterministe sur le bloc préparatoire par le composant de consensus et le composant de moteur central, dans lequel le composant de moteur central est configuré pour exécuter des transactions dans le bloc préparatoire pendant le traitement de consensus d'ordonnancement déterministe.

2. Procédé selon la revendication 1, dans lequel les informations de configuration de chaîne comprennent des informations de configuration de bloc et un identifiant d'ordonnancement de transactions ; et
dans lequel l'acquisition (S101) des informations de configuration de chaîne par le composant de moteur central, la création du bloc préparatoire au moyen des informations de configuration de chaîne, et la détermination du type d'ordonnancement de transactions au moyen des informations de configuration de chaîne comprennent :
l'acquisition des informations de configuration de bloc et de l'identifiant d'ordonnancement de transactions par le composant de moteur central ;
l'acquisition de transactions à mettre en paquet à partir d'un pool de transactions au moyen des informations de configuration de bloc, et l'exécution d'un traitement de mise en paquet de bloc sur les transactions à mettre en paquet au moyen des informations de configuration de bloc pour obtenir un bloc préparatoire ;
la détermination du fait que le type d'ordonnancement de transactions est un type d'ordonnancement non déterministe si l'identifiant d'ordonnancement de transactions est un identifiant d'ordonnancement non déterministe ; et
la détermination du fait que le type d'ordonnancement de transactions est un type d'ordonnancement déterministe si l'identifiant d'ordonnancement de transactions est un identifiant d'ordonnancement déterministe.

3. Procédé selon la revendication 1, dans lequel la transmission du premier bloc à téléverser dans le composant de moteur central au composant de consensus, et l'exécution du traitement de consensus d'ordonnancement non déterministe sur le premier bloc à téléverser par le composant de consensus comprennent :
la transmission du premier bloc à téléverser dans le composant de moteur central au composant de consensus ;
la détermination du type d'ordonnancement de transactions par le composant de consensus ;
lorsque le composant de consensus détermine que le type d'ordonnancement de transactions est le type d'ordonnancement non déterministe, l'exécution d'un traitement de pré-vote sur le premier bloc à téléverser dans le composant de consensus au moyen de la première séquence d'exécution de transactions et du premier résultat d'exécution de transactions dans le premier bloc à téléverser pour obtenir un premier résultat de pré-vote intermédiaire ; et
l'exécution d'un traitement de vote de résultat sur le premier bloc à téléverser au moyen du premier résultat de pré-vote intermédiaire et d'un premier hachage de bloc correspondant au premier bloc à téléverser pour obtenir un résultat de consensus d'ordonnancement non déterministe pour le premier bloc à téléverser.

4. Procédé selon la revendication 3, dans lequel l'exécution du traitement de pré-vote sur le premier bloc à téléverser dans le composant de consensus au moyen de la première séquence d'exécution de transactions et du premier résultat d'exécution de transactions pour obtenir le premier résultat de pré-vote intermédiaire comprend :
la génération d'informations de proposition pour le premier bloc à téléverser dans le composant de consensus, et la diffusion des informations de proposition à des nœuds de consensus dans un réseau de chaîne de blocs, de sorte que les nœuds de consensus dans le réseau de chaîne de blocs génèrent un deuxième résultat d'exécution de transactions au moyen des informations de proposition, et génèrent des premières informations de pré-vote au moyen du premier résultat d'exécution de transactions et du deuxième résultat d'exécution de transactions, le deuxième résultat d'exécution de transactions étant obtenu après que les nœuds de consensus dans le réseau de chaîne de blocs exécutent des transactions dans le premier bloc à téléverser au moyen de la première séquence d'exécution de transactions ;
la génération de deuxièmes informations de pré-vote pour le premier résultat d'exécution de transactions, et la diffusion des deuxièmes informations de pré-vote aux nœuds de consensus dans le réseau de chaîne de blocs ; et
la détermination du premier résultat de pré-vote intermédiaire au moyen des premières informations de pré-vote et des deuxièmes informations de pré-vote.

5. Procédé selon la revendication 3, dans lequel l'exécution du traitement de vote de résultat sur le premier bloc à téléverser au moyen du premier résultat de pré-vote intermédiaire et du premier hachage de bloc correspondant au premier bloc à téléverser pour obtenir le résultat de consensus d'ordonnancement non déterministe pour le premier bloc à téléverser comprend :
la génération de premières informations de vote pour le premier bloc à téléverser au moyen du premier résultat de pré-vote intermédiaire et du premier hachage de bloc correspondant au premier bloc à téléverser, dans lequel les premières informations de vote comprennent le premier résultat de pré-vote intermédiaire et le premier hachage de bloc ;
la transmission des premières informations de vote à des nœuds de consensus dans un réseau de chaîne de blocs ;
la réception de deuxièmes informations de vote pour le premier bloc à téléverser transmises par les nœuds de consensus dans le réseau de chaîne de blocs, les deuxièmes informations de vote contenant un résultat de pré-vote intermédiaire déterminé par les nœuds de consensus dans le réseau de chaîne de blocs et le premier hachage de bloc ; et
la détermination du résultat de consensus d'ordonnancement non déterministe pour le premier bloc à téléverser au moyen des premières informations de vote et des deuxièmes informations de vote.

6. Procédé selon la revendication 1, dans lequel la transmission du bloc préparatoire dans le composant de moteur central au composant de consensus, et l'exécution du traitement de consensus d'ordonnancement déterministe sur le bloc préparatoire par le composant de consensus et le composant de moteur central comprennent :
la transmission du bloc préparatoire dans le composant de moteur central au composant de consensus ;
la détermination d'un type d'ordonnancement de transactions par le composant de consensus ;
la génération d'informations de proposition pour le bloc préparatoire dans le composant de consensus lorsque le composant de consensus détermine que le type d'ordonnancement de transactions est un type d'ordonnancement déterministe, et la diffusion des informations de proposition à des nœuds de consensus dans un réseau de chaîne de blocs, de sorte que les nœuds de consensus dans le réseau de chaîne de blocs exécutent les transactions dans le bloc préparatoire dans les informations de proposition au moyen d'une séquence d'exécution de transactions déterministe ;
la génération de quatrièmes informations de pré-vote pour un troisième résultat d'exécution de transactions lorsque le troisième résultat d'exécution de transactions transmis par le composant de moteur central est reçu par le composant de consensus, et la diffusion des quatrièmes informations de pré-vote et du troisième résultat d'exécution de transactions aux nœuds de consensus dans le réseau de chaîne de blocs, de sorte que les nœuds de consensus dans le réseau de chaîne de blocs génèrent des troisièmes informations de pré-vote au moyen du troisième résultat d'exécution de transactions, le troisième résultat d'exécution de transactions étant obtenu après que le composant de moteur central commence à exécuter les transactions dans le bloc préparatoire selon la séquence d'exécution de transactions déterministe lorsque le bloc préparatoire est acquis ;
la détermination d'un deuxième résultat de pré-vote intermédiaire au moyen de troisièmes informations de pré-vote acquises et de quatrièmes informations de pré-vote ;
la mise à jour du bloc préparatoire au moyen du troisième résultat d'exécution de transactions pour obtenir un deuxième bloc à téléverser ; et
l'exécution d'un traitement de vote de résultat sur le deuxième bloc à téléverser au moyen du deuxième résultat de pré-vote intermédiaire et d'un deuxième hachage de bloc correspondant au deuxième bloc à téléverser pour obtenir un résultat de consensus d'ordonnancement déterministe pour le deuxième bloc à téléverser.

7. Procédé selon la revendication 1, dans lequel le composant de consensus comprend un composant d'adaptation de consensus et un composant d'exécution de consensus ; et
dans lequel la transmission (S103) du premier bloc à téléverser dans le composant de moteur central au composant de consensus, et l'exécution du traitement de consensus d'ordonnancement non déterministe sur le premier bloc à téléverser par le composant de consensus comprennent :
la transmission (S203) du premier bloc à téléverser dans le composant de moteur central au composant d'adaptation de consensus, et la génération d'un premier hachage de vote pour le premier bloc à téléverser dans le composant d'adaptation de consensus au moyen d'un premier hachage de bloc correspondant au premier bloc à téléverser ;
la transmission du premier bloc à téléverser et du premier hachage de vote dans le composant d'adaptation de consensus au composant d'exécution de consensus ;
l'exécution d'un traitement de pré-vote sur le premier bloc à téléverser dans le composant d'exécution de consensus au moyen de la première séquence d'exécution de transactions et du premier résultat d'exécution de transactions dans le premier bloc à téléverser pour obtenir un troisième résultat de pré-vote intermédiaire ; et
l'exécution d'un traitement de vote de résultat sur le premier bloc à téléverser au moyen du premier hachage de vote et du troisième résultat de pré-vote intermédiaire pour obtenir un résultat de consensus d'ordonnancement non déterministe pour le premier bloc à téléverser.

8. Procédé selon la revendication 1, dans lequel le composant de consensus comprend un composant d'adaptation de consensus et un composant d'exécution de consensus ; et
dans lequel la transmission (S104) du bloc préparatoire dans le composant de moteur central au composant de consensus, et l'exécution du traitement de consensus d'ordonnancement déterministe sur le bloc préparatoire par le composant de consensus et le composant de moteur central comprennent :
la transmission (S204) du bloc préparatoire dans le composant de moteur central au composant d'adaptation de consensus, la transmission du bloc préparatoire au composant d'exécution de consensus par le composant d'adaptation de consensus, la génération d'informations de proposition pour le bloc préparatoire dans le composant d'exécution de consensus, et la diffusion des informations de proposition à des nœuds de consensus dans un réseau de chaîne de blocs, de sorte que les nœuds de consensus dans le réseau de chaîne de blocs exécutent les transactions dans le bloc préparatoire dans les informations de proposition selon une séquence d'exécution de transactions déterministe ;
la réception d'un quatrième résultat d'exécution de transactions transmis par le composant de moteur central par le composant d'adaptation de consensus, le quatrième résultat d'exécution de transactions étant obtenu après que le composant de moteur central exécute les transactions dans le bloc préparatoire selon la séquence d'exécution de transactions déterministe ;
la mise à jour du bloc préparatoire dans le composant d'adaptation de consensus au moyen du quatrième résultat d'exécution de transactions pour obtenir un troisième bloc à téléverser, et la génération d'un deuxième hachage de vote pour le troisième bloc à téléverser au moyen d'un troisième hachage de bloc correspondant au troisième bloc à téléverser ;
la transmission du quatrième résultat d'exécution de transactions et du deuxième hachage de vote dans le composant d'adaptation de consensus au composant d'exécution de consensus ;
la génération de cinquièmes informations de pré-vote pour le quatrième résultat d'exécution de transactions dans le composant d'exécution de consensus, et la diffusion des cinquièmes informations de pré-vote et du quatrième résultat d'exécution de transactions aux nœuds de consensus dans le réseau de chaîne de blocs, de sorte que les nœuds de consensus dans le réseau de chaîne de blocs génèrent des sixièmes informations de pré-vote au moyen du quatrième résultat d'exécution de transactions ;
la détermination d'un quatrième résultat de pré-vote intermédiaire au moyen de sixièmes informations de pré-vote acquises et de cinquièmes informations de pré-vote ; et
l'exécution d'un traitement de vote de résultat sur le troisième bloc à téléverser au moyen du deuxième hachage de vote et du quatrième résultat de pré-vote intermédiaire pour obtenir un résultat de consensus d'ordonnancement déterministe pour le troisième bloc à téléverser.

9. Procédé selon la revendication 1, comprenant en outre :
l'exécution (S301) d'un traitement de vérification de signature sur un bloc devant faire l'objet d'un consensus dans le composant de consensus au moyen d'informations de proposition pour le bloc devant faire l'objet d'un consensus pour obtenir un résultat de vérification de signature lorsque le nœud de chaîne de blocs reçoit les informations de proposition par le composant de consensus, le bloc devant faire l'objet d'un consensus étant généré par un nœud de chaîne de blocs cible dans un réseau de chaîne de blocs lors de la détermination que la condition de sortie de bloc est satisfaite ;
la détermination (S302) du type d'ordonnancement de transactions par le composant de moteur central lorsque le composant de consensus détermine que le résultat de vérification de signature est un résultat de réussite de vérification de signature ;
l'acquisition (S303) d'une deuxième séquence d'exécution de transactions à partir du bloc devant faire l'objet d'un consensus lorsque le composant de moteur central détermine que le type d'ordonnancement de transactions est le type d'ordonnancement non déterministe, et l'exécution du bloc devant faire l'objet d'un consensus selon la deuxième séquence d'exécution de transactions pour obtenir un cinquième résultat d'exécution de transactions ;
la transmission (S304) du cinquième résultat d'exécution de transactions dans le composant de moteur central au composant de consensus, et l'exécution d'un traitement de vote de vérification sur le bloc devant faire l'objet d'un consensus dans le composant de consensus au moyen du cinquième résultat d'exécution de transactions pour obtenir un résultat de consensus pour le bloc devant faire l'objet d'un consensus ;
l'exécution (S305) du bloc devant faire l'objet d'un consensus selon une séquence d'exécution de transactions déterministe pour obtenir un sixième résultat d'exécution de transactions lorsque le composant de moteur central détermine que le type d'ordonnancement de transactions est le type d'ordonnancement déterministe ; et
la transmission (S306) du sixième résultat d'exécution de transactions dans le composant de moteur central au composant de consensus, et l'exécution d'un traitement de vote de vérification sur le bloc devant faire l'objet d'un consensus dans le composant de consensus au moyen du sixième résultat d'exécution de transactions pour obtenir un résultat de consensus pour le bloc devant faire l'objet d'un consensus.

10. Procédé selon la revendication 1, dans lequel le composant de consensus comprend un composant d'adaptation de consensus et un composant d'exécution de consensus ; et
dans lequel le procédé comprend en outre :
l'exécution (S401) d'un traitement de vérification de signature sur un bloc devant faire l'objet d'un consensus dans le composant d'exécution de consensus au moyen d'informations de proposition pour le bloc devant faire l'objet d'un consensus pour obtenir un résultat de vérification de signature lorsque le nœud de chaîne de blocs reçoit les informations de proposition par le composant d'exécution de consensus, le bloc devant faire l'objet d'un consensus étant généré par un nœud de chaîne de blocs cible dans un réseau de chaîne de blocs lorsque la condition de sortie de bloc est satisfaite ;
la transmission (S402) d'une requête d'exécution au composant d'adaptation de consensus par le composant d'exécution de consensus lorsque le composant d'exécution de consensus détermine que le résultat de vérification de signature est un résultat de réussite de vérification de signature, et la transmission de la requête d'exécution au composant de moteur central par le composant d'adaptation de consensus ;
la détermination (S402) du type d'ordonnancement de transactions dans le composant de moteur central selon la requête d'exécution ;
l'acquisition (S403) d'une deuxième séquence d'exécution de transactions à partir du bloc devant faire l'objet d'un consensus lorsque le composant de moteur central détermine que le type d'ordonnancement de transactions est le type d'ordonnancement non déterministe, et l'exécution du bloc devant faire l'objet d'un consensus selon la deuxième séquence d'exécution de transactions pour obtenir un septième résultat d'exécution de transactions ;
la transmission (S403) du septième résultat d'exécution de transactions dans le composant de moteur central au composant d'adaptation de consensus, et la génération d'un troisième hachage de vote dans le composant d'adaptation de consensus selon le septième résultat d'exécution de transactions ;
la transmission (S404) du septième résultat d'exécution de transactions et du troisième hachage de vote au composant d'exécution de consensus par le composant d'adaptation de consensus, et l'exécution d'un traitement de vote de vérification sur le bloc devant faire l'objet d'un consensus dans le composant d'exécution de consensus selon le septième résultat d'exécution de transactions et le troisième hachage de vote pour obtenir un résultat de consensus pour le bloc devant faire l'objet d'un consensus ;
l'exécution (S405) du bloc devant faire l'objet d'un consensus selon une séquence d'exécution de transactions déterministe pour obtenir un huitième résultat d'exécution de transactions lorsque le composant de moteur central détermine que le type d'ordonnancement de transactions est le type d'ordonnancement déterministe ;
la transmission (S405) du huitième résultat d'exécution de transactions du composant de moteur central au composant d'adaptation de consensus, et la génération d'un quatrième hachage de vote dans le composant d'adaptation de consensus selon le huitième résultat d'exécution de transactions ; et
la transmission (S406) du huitième résultat d'exécution de transactions et du quatrième hachage de vote au composant d'exécution de consensus par le composant d'adaptation de consensus, et l'exécution d'un traitement de vote de vérification sur le bloc devant faire l'objet d'un consensus dans le composant d'exécution de consensus selon le huitième résultat d'exécution de transactions et le quatrième hachage de vote pour obtenir un résultat de consensus pour le bloc devant faire l'objet d'un consensus.

11. Procédé selon la revendication 2, comprenant en outre :
l'acquisition d'une transaction de mise à jour d'informations de configuration, dans lequel la transaction de mise à jour d'informations de configuration comprend la mise à jour d'un identifiant d'ordonnancement de transactions ; et
l'appel d'un contrat de mise à jour d'informations de configuration selon la transaction de mise à jour d'informations de configuration lorsqu'il est déterminé que la transaction de mise à jour d'informations de configuration est réussie en consensus, et la mise à jour de l'identifiant d'ordonnancement de transactions par le contrat de mise à jour d'informations de configuration.

12. Dispositif de traitement de données basé sur une chaîne de blocs (1), **caractérisé en ce que** le dispositif est situé dans un nœud de chaîne de blocs comprenant un composant de moteur central et un composant de consensus, et le dispositif comprend :
un module de mise en paquet (11), configuré pour : lorsqu'il est déterminé par le composant de moteur central qu'une condition de sortie de bloc est satisfaite, acquérir des informations de configuration de chaîne par le composant de moteur central, créer un bloc préparatoire au moyen des informations de configuration de chaîne, et déterminer un type d'ordonnancement de transactions au moyen des informations de configuration de chaîne, dans lequel la condition de sortie de bloc désigne une condition selon laquelle le nœud de chaîne de blocs est sélectionné en tant que nœud de proposition pour un tour actuel de blocs ;
un premier module d'exécution (12), configuré pour exécuter le bloc préparatoire par le composant de moteur central pour obtenir un premier bloc à téléverser lorsque le composant de moteur central détermine que le type d'ordonnancement de transactions est un type d'ordonnancement non déterministe, dans lequel le premier bloc à téléverser comprend une première séquence d'exécution de transactions et un premier résultat d'exécution de transactions ;
un premier module de consensus (13), configuré pour transmettre le premier bloc à téléverser dans le composant de moteur central au composant de consensus, et exécuter un traitement de consensus d'ordonnancement non déterministe sur le premier bloc à téléverser par le composant de consensus ; et
un deuxième module de consensus (14), configuré pour, lorsque le composant de moteur central détermine que le type d'ordonnancement de transactions est un type d'ordonnancement déterministe, transmettre le bloc préparatoire dans le composant de moteur central au composant de consensus, et exécuter un traitement de consensus d'ordonnancement déterministe sur le bloc préparatoire par le composant de consensus et le composant de moteur central, dans lequel le composant de moteur central est configuré pour exécuter des transactions dans le bloc préparatoire pendant le traitement de consensus d'ordonnancement déterministe.

13. Dispositif informatique (1000), comprenant : un processeur (1001), une mémoire (1005), et une interface réseau (1004), dans lequel
le processeur (1001) est connecté à la mémoire (1005) et à l'interface réseau (1004), l'interface réseau (1004) est configurée pour fournir une fonction de communication de données, la mémoire (1005) est configurée pour stocker un code de programme, et le processeur (1001) est configuré pour appeler le code de programme pour exécuter le procédé selon l'une quelconque des revendications 1 à 11.

14. Support de stockage lisible par ordinateur dans lequel est stocké un programme informatique qui, lorsqu'il est chargé et exécuté par un processeur, amène le processeur à exécuter le procédé selon l'une quelconque des revendications 1 à 11.

15. Produit de programme informatique comprenant un programme/une instruction informatique, le programme/l'instruction informatique, lorsqu'il/elle est exécuté(e) par un processeur, mettant en œuvre le procédé selon l'une quelconque des revendications 1 à 11.
